(19) **Europäisches Patentamt European Patent Office Office européen des brevets**

(11) **EP 1 356 382 B1**

(12) **FASCICULE DE BREVET EUROPEEN**

(45) Date de publication et mention
de la délivrance du brevet:
**23.01.2008 Bulletin 2008/04**

(21) Numéro de dépôt: **01271582.7**

(22) Date de dépôt: **04.12.2001**

(51) Int Cl.:
***G06F 9/50*** *(2006.01)*

(86) Numéro de dépôt international:
**PCT/FR2001/003826**

(87) Numéro de publication internationale:
**WO 2002/050676 (27.06.2002 Gazette 2002/26)**

(54) **PROCEDE DE PLACEMENT D'APPLICATIONS MULTIPROCESSEURS**

**VERFAHREN ZUM PLAZIEREN VON MEHRPROZESSORANWENDUNGEN**

**METHOD FOR PLACING MULTIPROCESSOR APPLICATIONS**

(84) Etats contractants désignés:
**AT BE CH CY DE DK ES FI FR GB GR IE IT LI LU MC NL PT SE TR**

(30) Priorité: **19.12.2000 FR 0016589**

(43) Date de publication de la demande:
**29.10.2003 Bulletin 2003/44**

(73) Titulaire: **Thales**
**92200 Neuilly Sur Seine (FR)**

(72) Inventeur: **LENORMAND, Eric;Thales Intellectual Prty**
**F-94117 Arcueil cedex (FR)**

(74) Mandataire: **Lucas, Laurent Jacques et al**
**Marks & Clerk France**
**31-33 Avenue Aristide Briand**
**94117 Arcueil Cedex (FR)**

(56) Documents cités:
**FR-A- 2 791 789**

- **P BOULET ET AL: "Communication Pre-evaluation in HPF" PUBLICATION AS-182 LABORATOIRE D' INFORMATIQUE FONDAMENTALE DE LILLE, 17 mars 1998 (1998-03-17), pages 1-31, XP002180510 Lille, France**
- **GUETTIER C: "Optimisation globale du placement d' applications de traitement du signal sur architectures parallèles utilisant la programmation logique avec contraintes; chapitre 2" THESE ECOLE DES MINES DE PARIS, XX, XX, 12 décembre 1997 (1997-12-12), pages 41-68, XP002140827**

**Description**

La présente invention concerne un procédé de placement d'applications multiprocesseurs. Elle s'applique notamment au placement d'applications déterministes nécessitant une forte puissance de calcul, telles que les traitements de signaux systématiques (TSS) des radars, les traitements d'images, ou les compressions de données temps réel.

On appelle application multiprocesseur une application destinée à être exécutée sur une architecture multiprocesseur. Une architecture comprend des éléments matériels (dits « hardware » dans la littérature anglo-saxonne) et des éléments logiciels (dits « software » dans la littérature anglo-saxonne). Les éléments matériels comprennent par exemple des processeurs, des mémoires, des circuits spécialisés, et des bus de données. Les éléments logiciels comprennent par exemple un jeu d'instructions de base, dit API (de l'expression anglo-saxonne « Application Programming Interface »), des programmes de communication bas niveau, et un ordonnanceur. Les éléments matériels d'une architecture s'appellent aussi des ressources. Les éléments logiciels d'une architecture s'appellent aussi des services.

Le placement est une opération intervenant lors du développement d'applications multiprocesseurs voir p. ex. FR-A-2 791 789. Il consiste à transformer une application décrite de manière fonctionnelle en un ensemble de sous-applications destinées chacune à l'un des processeurs d'une architecture cible. Lors de l'étape de placement, on cherche à faire exécuter des calculs en parallèle par plusieurs processeurs de l'architecture cible. Une première manière d'exécuter des calculs en parallèle, appelée parallélisme de tâche, consiste à répartir des tâches différentes sur plusieurs processeurs ou groupes de processeurs, Les différentes tâches s'exécutent alors en même temps sur des processeurs ou groupes de processeurs différents. Une seconde manière d'exécuter des calculs en parallèle, appelée parallélisme de données, consiste à répartir une même tâche sur plusieurs processeurs. Selon ce second mode de fonctionnement, dit SIMD ou SPMD (« Single Instruction Multiple Data » ou « Single Program Multiple Data »), plusieurs processeurs exécutent alors en même temps et de façon synchronisée des calculs correspondant à une même tâche, mais sur des données différentes.

Le placement comprend généralement une étape appelée partitionnement, une étape appelée affectation et une étape appelée ordonnancement. Le partitionnement consiste, à partir d'une application décrite de manière fonctionnelle, à déterminer des étapes de calculs élémentaires appelées tâches d'une part, et / ou à partager des blocs de données homogènes en blocs de données élémentaires d'autre part. L'affectation, connue sous le nom de « mapping » dans la littérature anglo-saxonne, consiste à allouer les tâches élémentaires et les blocs de données élémentaires aux éléments de l'architecture tels que des processeurs pour des tâches, et des mémoires pour des blocs de données. L'ordonnancement consiste à déterminer la chronologie d'exécution des tâches. L'architecture multiprocesseur choisie est souvent appelée architecture cible. L'application peut être décrite de manière fonctionnelle par un logiciel de haut niveau ou par une représentation graphique ou DFG (de l'expression anglo-saxonne « Data Flow Graph »). Les tâches peuvent être décrites sous une forme manipulable par des outils de génération de code (compilateurs par exemple), ou sous forme de codes utilisables par des processeurs élémentaires.

Un bon placement permet d'assurer un bon rendement de l'architecture, c'est à dire une exploitation presque optimale de ses ressources. Par conséquent, un tel placement permet d'économiser des composants matériels dans l'architecture. Une architecture cible peut passer par exemple de 20 cartes électroniques à 10 cartes électroniques, grâce à un meilleur placement d'une même application.

Il apparaît donc que pour de tels systèmes, le placement d'une application sur une architecture cible est crucial. Pour des systèmes nécessitant une forte puissance de calcul, le placement est complexe, par conséquent long et coûteux. Outre ces problèmes de temps et coût, il faut ajouter des problèmes de fiabilité. En effet, on peut introduire des erreurs liées à la gestion de la mémoire par exemple : en appliquant un calcul à de mauvaises données, ou en saturant une mémoire. Ces erreurs apparaissent souvent très tard, généralement lors de la réalisation des prototypes. Elles sont dures à identifier car les causes peuvent être multiples.

Un but de l'invention est de pallier aux inconvénients précités et notamment de permettre de faciliter le placement d'applications, en le rendant plus rapide, et en permettant d'effectuer une vérification de l'intégrité du placement.

A cet effet l'invention concerne un procédé de placement d'applications multiprocesseurs sur une architecture cible, et un dispositif permettant de mettre en oeuvre le procédé. Le procédé comprend au moins les étapes suivantes :

(a) une étape de partitionnement suivant les données d'une application préalablement partitionnée en tâches de calcul ;
(b) une étape d'affectation desdites tâches de calcul, partitionnées suivant les données, à des unités de calcul de l'architecture cible ;
(c) une étape de saisie de tâches de communication, lesdites tâches de communication permettant de copier totalement ou partiellement les données d'un tableau départ vers un tableau d'arrivée, ledit tableau de départ affecté à des mémoires de départ de l'architecture cible, ledit tableau d'arrivée étant affecté à des mémoires d'arrivée de l'architecture cible.

Selon un mode de réalisation avantageux, la saisie d'une tâche de communication lors de l'étape (c) est réalisée en spécifiant d'une part :

(a) une étape de spécification d'un mouvement élémentaire, ledit mouvement élémentaire consistant à copier les éléments d'un motif opérande dans un motif résultat, ledit mouvement élémentaire étant répété plusieurs fois par la tâche de communication ; et d'autre part,
(b) une étape de spécification d'accès, ledit accès comprenant d'une part la relation entre les éléments du motif opérande avec les données du tableau de départ, et d'autre part la relation entre les éléments du motif résultat avec les données du tableau d'arrivée.

Selon un autre mode de réalisation avantageux, le procédé comprend en outre une étape de saisie de tâches d'appel, lesdites tâches d'appel faisant appel à d'autres tâches de communication et/ou de calcul et/ou d'appel.

Selon un autre mode de réalisation avantageux, le procédé comprend en outre une étape de simulation permettant de tester l'application placée lors des étapes précédentes.

L'invention a pour principaux avantages qu'elle permet de déterminer le temps d'exécution sur l'architecture cible de l'application placée, alors même que ladite architecture cible n'existe pas encore.

D'autres caractéristiques et avantages de l'invention apparaîtront à l'aide de la description qui suit faite en regard de dessins annexés qui représentent :

- la figure 1, un schéma synoptique d'un exemple d'atelier d'aide au placement d'applications permettant de mettre en oeuvre le procédé selon l'invention ;
- les figures 2a et 2b, un exemple d'architecture ciblé ayant une structure symétrique ;
- la figure 3, un exemple de tâche de calcul d'une application radar ;
- la figure 4, un exemple des informations affichées par l'interface de saisie de l'atelier illustré figure 1 ;
- les figures 5, 6, 7, 9, 11, 12, 14, 16a, 16b, des exemples de vues affichées par l'interface de saisie de l'atelier lors d'étapes du placement ;
- les figures 8, 10, 13a, 13b, 15a, 15b, des exemples de tableaux de mémoires d'une architecture cible ;
- les figures 17a et 17b, des exemples de résultats d'une simulation du temps d'exécution d'une application placée sur une architecture cible avec l'atelier illustré figure 1.

On décrit maintenant un exemple non limitatif de placement selon l'invention d'une application radar de TSS.

L'application de TSS considérée comprend des séquences de tâches, appelées nids de boucles, bien structurées et parallèles. Chaque nid de boucles contient un appel à une procédure ou macro-instruction correspondant en général à une transformation de tableau c'est à dire à une fonction d'une librairie de traitement du signal telle qu'une FFT. Les traitements sont réguliers et s'effectuent sur des signaux multidimensionnels, les données sont organisées en tableaux dont les dimensions (par exemple source, fréquence, temps récurrence, temps pointage) portent les vecteurs sur lesquels vont s'effectuer les traitements individuels. L'application est globalement représentée par un graphe de flot de données acyclique dans lequel chaque élément de tableau n'est mis qu'une seule fois à jour par l'application. Enfin, le déroulement de l'application ne découle pas d'événements extérieurs ni de résultats de calcul apparaissant lors de l'exécution, ce qui fait que ce déroulement est prévisible. En d'autres termes, le déroulement de l'application est déterministe.

Bien entendu, l'invention s'applique à tout type d'application de TSS, notamment aux applications déterministes par parties. Ces applications déterministes par parties comprennent des séquences de traitements déterministes de durée limitée, qui se succèdent dans le temps dans un ordre non prévisible a priori. C'est le cas des traitements radar multi-mode par exemple.

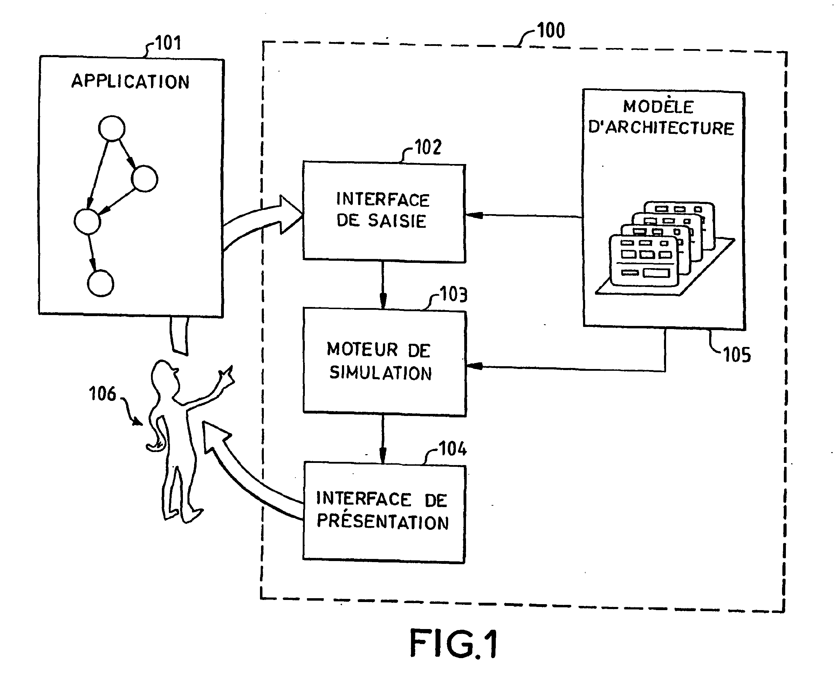

La figure 1 illustre un exemple d'atelier d'aide au placement d'applications. Cet atelier 100 comprend une interface de saisie 102 qui permet de saisir une application non placée 101. Cette interface de saisie 102 est reliée fonctionnellement à un modèle 105 de l'architecture cible faisant partie intégrante de l'atelier 100. Grâce aux commandes de l'interface de saisie 102 et sous contrôle d'opérations de vérifications incluses dans l'atelier 100, l'utilisateur (appelé parfois «mappeur») 106 partitionne l'application 101. Puis l'utilisateur 106 réalise une affectation aux différentes ressources de l'architecture modélisée 105. Enfin, l'utilisateur 106 déclenche une simulation comportementale conduite par un moteur de simulation 103 inclus dans l'atelier 100. L'atelier 100 permet de simuler le comportement de l'architecture modélisée 105. Une interface de présentation 104 incluse dans l'atelier 100 permet de présenter les résultats en termes de timing et d'occupation des mémoires en fonction du temps. L'utilisateur 106 répète le placement de façon itérative jusqu'à ce qu'un placement satisfaisant ait été trouvé. L'application 101 est alors transformée en un ensemble d'applications mono-processeurs dont il reste à générer le code exécutable avec des moyens usuels.

Le placement de l'application est manuel, dans le sens où les décisions clés sont laissées à l'utilisateur 106. L'atelier 100 permet de présenter les informations les plus appropriées pour aider l'utilisateur 106. Parmi ces informations, certaines proviennent d'une simulation comportementale de l'architecture.

En utilisant l'atelier, l'utilisateur partitionne d'abord l'application suivant les tâches en plusieurs partitions primaires. Chaque partition primaire est affectée à un sous-ensemble de l'architecture cible. Puis chaque partition primaire est partitionnée suivant les données. On appelle architecture segment chacun des sous-ensembles de l'architecture cible sur lequel s'effectuent des calculs mettant en oeuvre du parallélisme de données.

On appelle architecture segment répétitive, une architecture segment dont les ressources sont agencées d'une manière régulière, de manière à pouvoir être regroupées dans des tableaux d'éléments identiques. Lorsque ces tableaux ont plusieurs dimensions, ces dimensions peuvent se représenter par des niveaux. Un niveau correspond souvent à une ressource de l'architecture, telle qu'une carte électronique, sur laquelle sont disposées d'autres ressources, telles que des mémoires par exemple. Chaque niveau comprend des éléments, tels que des ensembles homogènes d'une part, et / ou des ressources spécifiques d'autre part. Les ensembles homogènes d'un niveau peuvent comprendre à leur tour des éléments de niveau inférieur.

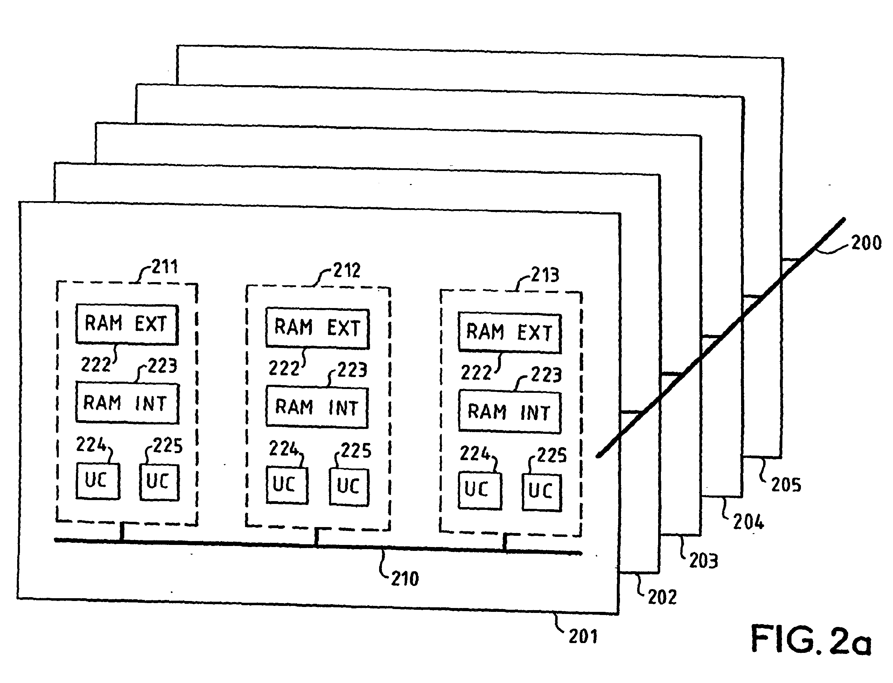

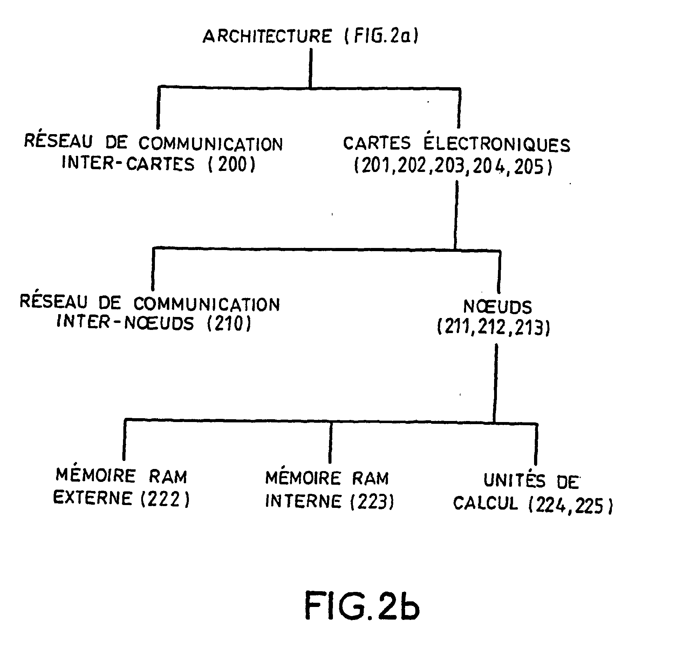

Les figures 2a et 2b illustrent un exemple d'architecture segment répétitive. Cette architecture comprend quatre niveaux. Le premier niveau (niveau 1) comprend des ensembles homogènes, à savoir quatre cartes électroniques 201, 202, 203, 204, 205, et une ressource spécifique, à savoir un réseau de communication inter-cartes 200. Le réseau de communication inter-cartes 200 relie les cartes électroniques entre elles.. Les cartes électroniques comprennent à leur tour des éléments de niveau inférieur (niveau 2) 211, 212, 213, 210. La carte électronique 201 par exemple comprend des ensembles homogènes, à savoir trois noeuds 211, 212, 213, et une ressource spécifique, à savoir un réseau de communication inter-noeuds 210. Chaque réseau de communication inter-noeuds 210 relie les noeuds d'une même carte entre eux. Le réseau de communication inter-noeuds 210 comprend par exemple un bus. Les noeuds 211, 212, 213 comprennent à leur tour des éléments de niveau inférieur (niveau 3) 224, 225 222, 223. Par exemple le noeud 211 comprend deux ressources spécifiques, à savoir une mémoire RAM externe 222 d'une part et une mémoire RAM interne 223 d'autre part, et des ensembles homogènes, à savoir deux unités de calcul (UC) 224,225. Les unités de calcul 224, 225 comprennent à leur tour des éléments de niveau inférieur (niveau 4). Ce dernier niveau (non représenté) comprend des ressources spécifiques uniquement, ces ressources étant des éléments des unités de calculs.

En d'autres termes, l'architecture segment répétitive illustrée figure 2 comprend lesressources spécifiques et les ensembles homogènes suivants :

| niveau | ressources spécifiques | ensembles homogènes |
|---|---|---|
| 1 | 1 réseau de communication inter-cartes (200) | 5 cartes électroniques (201, 202, 203, 204, 205) |
| 2 | 1 réseau de communication inter-noeuds (210) | 3 noeuds (211, 212, 213) |
| 3 | 1 mémoire RAM externe (222) 1 mémoire RAM interne (223) | 2 unités de calcul (224, 225) |
| 4 | Eléments de l'unité de calcul (non représenté) | |

Les réseaux de communication inter-noeuds 210 peuvent être regroupés dans un tableau INTER à une dimension comprenant 5 éléments. Chaque élément du tableau INTER correspond au réseau de communication 210 d'une carte électronique. Les mémoires RAM externes 222 peuvent être regroupées dans un tableau RAM_EXT à deux dimensions, la première dimension comprenant 5 éléments, la seconde dimension comprenant 3 éléments. L'élément RAM_EXT[i][j] correspond à la mémoire RAM externe 222 de la i$^{ème}$ carte électronique, et du j$^{ème}$ noeuds. De la même façon, les mémoires RAM internes 223 peuvent être regroupées dans un tableau RAM_INT à deux dimensions. Les unités de calculs peuvent être regroupées dans un tableau UC à trois dimensions, la première dimension comprenant 5 éléments, la seconde dimension comprenant 3 éléments, et la troisième dimension comprenant 2 éléments. L'élément UC[i][j][k] correspond à la k$^{ème}$ unité de calcul de la i$^{ème}$ carte électronique, du j$^{ème}$ noeuds.

Afin de faciliter la compréhension de cet exposé, nous utilisons un formalisme tableau, dit Array-OL (de l'expression anglo-saxonne « array oriented language »). Ce formalisme tableau est adapté aux traitements de signaux multi-dimensionnels. On pourra se référer au document de Alain Demeure, Anne Lafage, Emmanuel Boutillon, Didier Rozzonelli, Jean-Claude Dufourd, et Jean-Louis Marro, « Array-OL : Proposition d'un formalisme tableau pour le traitement de signal multi-dimensionnel. », à Grestsi, Juan-Les-Pins, France, Septembre 1995.

Le formalisme Array-OL permet de décrire l'emplacement des données dans un tableau auxquelles accède une tâche de calcul en lecture (tableau d'entrée, ou opérande) ou en écriture (tableau de sortie, ou résultat). Cette description, faite avec le formalisme Array-OL, s'appelle la spécification des accès d'une tâche. Une tâche peut être décrite à partir d'une spécification des calculs d'une part, et d'une spécification des accès d'autre part. La spécification des accès est distincte de la spécification des calculs effectués par la tâche.

Une tâche de calcul peut se décomposer en une répétition d'un calcul élémentaire effectué sur des données ayant une même structure. On appelle transformation élémentaire ce calcul élémentaire réalisé lors d'une itération. A chaque itération, la transformation élémentaire accède à une partie des données des tableaux opérande et des tableaux résultat. Ces groupes de données extraites des tableaux s'appellent des motifs. A chaque tableau opérande est associé un motif opérande, et à chaque tableau résultat est associé un motif résultat. Les motifs peuvent être représentés par des tableaux à une dimension, ayant un nombre d'éléments déterminés. Un motif peut bien entendu être aussi représenté par un tableau à plusieurs dimensions. Dans le but de faciliter la compréhension de cet exposé, on n'utilisera que des motifs tableau à une dimension. Les explications fournies se généralisent facilement à tout type de motif.

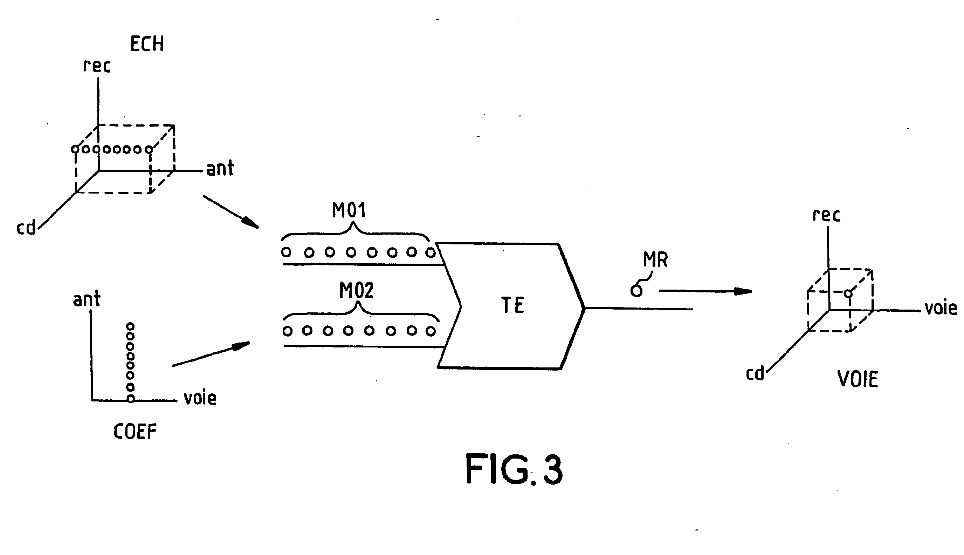

On se réfère maintenant à la figure 3 sur laquelle est représenté un exemple de tâche de calcul d'une application radar. Cette tâche de calcul permet de réaliser une formation de faisceau par calcul. Elle produit un tableau BF à 3 dimensions (cd, voie, rec) à partir d'un tableau d'échantillons ECH à trois dimensions (cd, ant, rec), et d'un tableau de coefficients COEF à deux dimensions (voie, ant). Les dimensions cd, ant et rec du tableau ECH correspondent à une distance, un capteur, et un temps. Elles sont indexées respectivement par le numéro de case distance num_cd, le numéro d'antenne num_ant, et le numéro de récurrence num_rec. Les dimensions voie et ant du tableau COEF correspondent à une voie et un capteur. Elles sont indexées respectivement par le numéro de voie num_voie et le numéro d'antenne num_ant. Les dimensions cd, voie et rec du tableau BF sont indexées respectivement par le numéro de case distance num_cd, le numéro de voie num_voie, et le numéro de récurrence num-rec.

La tâche de calcul :

- pondère les échantillons du tableau ECH par les coefficients du tableau COEF;
- et, somme 8 échantillons pondérés, sur l'indice num_ant, et ce pour chaque indice num_rec, num_cd, et num_voie. Les échantillons pondérés intervenant dans cette somme correspondent à 8 capteurs du radar (indice num_ant).

En utilisant le formalisme Array-OL appliqué à cet exemple, on peut décomposer cette tâche en une répétition d'une transformation élémentaire TE. Cette transformation élémentaire TE utilise deux motifs opérandes MO1 et MO2 de 8 éléments chacun, et produit un motif résultat MR de 1 élément. On peut écrire les calculs effectués par la transformation élémentaire TE avec la relation suivante :

$$MR = \sum_{i=1}^{8} MO1[i] \times MO2[i] \qquad (1)$$

D'une manière générale, la spécification des calculs effectués par une tâche est l'ensemble des calculs réalisés dans une transformation élémentaire. Dans l'exemple considéré, la spécification des calculs effectués par la tâche de formation de faisceau par calcul est donnée par la relation (1).

La transformation élémentaire TE est répétée par la tâche dans une ou plusieurs boucles imbriquées. Ces boucles ont des indices qui leur sont associés. On note n1, n2, n3, ... ces indices de boucles et N1, N2, N3,... le nombre d'itérations effectuées par chacune de ces boucles. En utilisant une représentation vectorielle, l'ensemble des indices n1, n2, n3,... peuvent être associés à des dimensions d'un espace multidimensionnel. Cet espace a autant de dimensions qu'il y a de boucles imbriquées, c'est à dire d'indices de boucles. A chaque dimension de cet espace, on associe une taille : le nombre d'itérations N1, N2, N3, .... On peut représenter cet espace et les tailles associées au dimensions par un n-uplet d'entiers (N1, N2, N3,...). Ce n-uplet représente un espace de dimension finie, où chaque dimension correspond à un indice de boucle, et chaque taille correspond à un nombre d'itérations. Le $k^{ième}$ élément du n-uplet représente le nombre d'itérations effectuées par la tâche suivant le $k^{ième}$ indice de boucle. On appelle cet espace de dimension finie, l'espace d'itération de la tâche.

Les motifs opérandes MO1, MO2 et le motif résultat MR sont associés respectivement aux tableaux d'entrée ECH, COEF et au tableau de sortie BF. La liaison entre les éléments d'un motif et les éléments d'un tableau est la spécification d'accès de la tâche. En d'autres termes, la spécification d'accès permet de déterminer la correspondance entre les éléments d'un motif et les éléments du tableau associé. Cette correspondance entre les éléments d'un motif et les éléments d'un tableau dépend des indices de boucle de la tâche d'une part, et des indices utilisés dans la transformation élémentaire TE d'autre part.

La spécification d'accès peut se décomposer en trois parties :

- La première partie est indépendante des indices de boucles de la tâche ou des indices utilisés dans la transformation élémentaire. C'est l'élément pris comme origine dans le tableau. Cette première partie de spécification d'accès est appelée l'origine. L'origine donne la relation entre le premier élément d'un motif et un élément du tableau pour la première itération de la tâche.
- La seconde partie est liée aux indices utilisés dans la transformation élémentaire TE. Dans l'exemple considéré, il n'y a qu'un indice de TE, l'indice i. Cette seconde partie est appelée l'ajustage. L'ajustage donne la relation entre les autres éléments d'un motif et les éléments d'un tableau pour la première itération de la tâche.

- La troisième partie est liée aux indices de boucle de la tâche. Cette troisième partie est appelée le pavage. Le pavage donne relation entre les indices du motif et du tableau en fonction des indices de boucle de la tâche. Le pavage peut être vu comme la le déplacement du motif dans le tableau pour les itérations suivantes de la tâche.

L'origine, l'ajustage et le pavage d'un motif peuvent se représenter avec des vecteurs. Ces vecteurs ont autant d'éléments que le tableau associé au motif a d'indices, c'est à dire de dimensions :

- On représente l'origine par un vecteur ORG.
- On représente l'ajustage par autant de vecteurs AJ1, AJ2, AJ3, ... qu'il y a d'indices utilisés dans la transformation élémentaire TE. Dans l'exemple considéré, il n'y a qu'un seul indice i, donc un seul vecteur AJ1.
- On représente le pavage par autant de vecteurs PAV1, PAV2, PAV3, ... que l'espace d'itération a de dimensions, c'est à dire d'indices de boucle de la tâche.

Dans l'exemple considéré, la tâche a trois boucles imbriquées sur les indices n1, n2 et n3. L'indice de boucle n1 correspond à la dimension cd pour les tableaux ECH et BF. L'indice de boucle n2 correspond à la dimension rec pour les tableaux ECH et VOIE. L'indice de boucle n3 correspond à la dimension voie pour les tableaux COEF et BF.
On utilise plusieurs notations équivalentes pour représenter un élément d'un tableau. Par exemple, l'élément du tableau ECH correspondant aux indices num_cd = 1, num_ant = 2 et num_rec = 3 se note :

- ECH[1, 2, 3], ou bien
- ECH[1][2][3], ou bien
- ECH[V] où V est un vecteur d'indices valant (1, 2, 3).

On peut représenter les calculs effectués par la tâche de calcul par les instructions suivantes en C :

```
              «
 For (n1 = 0 ; n1 < N1 ; n1++)
      For (n2 = 0 ; n2 < N2 ; n2++)
           For (n3 = 0 ; n3 < N3 ; n3++ {
                MR = 0 ;
                For (i = 0 ; i < 8 ; i++)
                     MO1 [i] = ECH [n1] [i] [n2] ;
                     M02 [i] =COEF[n3] [i] ;
                     MR = MR + MO1[1] +MO2[i] ;
                     BF[n1] [n3] [n2] = MR;
                }
           »
```

Ainsi, les éléments du motif MO1 peuvent être associés aux éléments du tableau ECH par la relation suivante :

$$\mathrm{MO1}[i] = \mathrm{ECH}\big[\mathrm{ORG} + i \times \mathrm{AJ1} + n1 \times \mathrm{PAV1} + n2 \times \mathrm{PAV2} + n3 \times \mathrm{PAV3}\big] \qquad (2)$$

où on utilise une combinaison linéaire de vecteurs d'indices, ces vecteurs étant :

$$\mathrm{ORG} = \begin{pmatrix} 0 & 0 & 0 \end{pmatrix} \qquad (3)$$

$$\mathrm{AJ1} = \begin{pmatrix} 0 & 1 & 0 \end{pmatrix} \qquad (4)$$

$$PAV1 = (1 \quad 0 \quad 0) \tag{5}$$

$$PAV2 = (0 \quad 0 \quad 1) \tag{6}$$

$$PAV3 = (0 \quad 0 \quad 0) \tag{7}$$

La relation (2) est équivalente à :

$$MO1[i] = ECH[n1 \quad i \quad n2] \tag{8}$$

Les vecteurs d'indices peuvent s'écrire à partir d'une combinaison linéaire de vecteurs de base de l'espace vectoriel naturel associé à un tableau. On utilise les mêmes noms pour représenter les vecteurs de base et les dimensions associées. Ainsi, on peut écrire AJ1=ant, PAV1=cd, et PAV2=rec. De la même façon, on peut utiliser des notations abrégées pour les autres tableaux COEF et BF. Les spécifications d'accès de la tâche, utilisant des notations abrégées sont données dans le tableau suivant :

| | Origine | Ajustage | Pavage | | |
|---|---|---|---|---|---|
| Tableau | | **8** | **N1** | **N2** | **N3** |
| ECH | 0 | ant | cd | rec | 0 |
| COEF | 0 | ant | 0 | 0 | voie |
| BF | 0 | 0 | cd | rec | voie |

Dans ce tableau, on ne rappelle pas les noms d'indices utilisés dans l'exemple car ils n'apportent aucune d'information (indices muets). Une colonne du tableau correspond à un même indice (sauf pour l'origine). On a représenté en caractères gras le nombre d'itérations réalisées par indice.

Dans ce tableau, les vecteurs d'indices égaux aux vecteurs de base, et identiques dans une même colonne du tableau. Ceci n'est pas une obligation. Il peut y avoir des noms d'indices différents dans une même colonne. Les vecteurs d'indices peuvent être un multiple ou une combinaison linéaire des vecteurs unitaires.

Avant le début du placement, l'utilisateur saisit une description de l'application partitionnée en tâches. Cette description peut se faire avec un fichier texte par exemple. Cette description comprend :

• une description des tableaux utilisés et produits par les tâches de calcul,
• une déclaration des transformations élémentaires utilisées dans les tâches de calcul,
• une description des tâches.

On décrit un exemple de syntaxe d'un tel fichier texte. Dans la description de cette syntaxe, on représente en caractères gras les mots clefs de la syntaxe, entre crochets < > chaque champ que l'utilisateur doit paramétrer, entre crochets [] les groupes optionnels de mots clefs et / ou de champs.

La syntaxe de description des tableaux peut être la suivante :

«

```
array of <type élémentaire> <nom du tableau> <nombre
d'éléments pour la 1ière dimension> <nombre d'éléments pour la
2ième dimension> … <nombre d'éléments pour la nième dimension>
[ dimensions <nom de la 1ière dimension> <nom de la 2ième
dimension> … <nom de la nième dimension> ]
```

»

<type élémentaire> est une chaîne de caractère représentant un type élémentaire. Cette chaîne de caractères peut être par exemple short, int, float, complex pour représenter respectivement un entier court, un entier long, un nombre réel et un nombre complexe.

<nom du tableau> est une chaîne de caractères qui sera utilisée dans la suite du fichier pour faire référence à ce tableau.

La syntaxe de déclaration des transformations élémentaires peut être la suivante :

«

```
transform <nom de la transformation élémentaire>
in <nombre d'éléments du 1er motif opérande>
in <nombre d'éléments du 2nd motif opérande>
…
in <nombre d'éléments du nième motif opérande>
out <nombre d'éléments du 1er motif résultat>
out <nombre d'éléments du 2nd motif résultat>
…
out <nombre d'éléments du nième motif résultat>
end
```

»

<nom de la transformation élémentaire> est une chaîne de caractères qui sera utilisé dans la suite du fichier pour faire référence à cette transformation élémentaire.

La syntaxe de description des tâches peut être la suivante :

```
«

task <nom de la tâche>
do <nombre d'itérations 1ière dimension> <nombre d'itération 2nde
dimension> … <nombre d'itérations nième dimension>
using <nom de la transformation élémentaire>
array_in <nom du 1er tableau d'entrée> org <vecteur d'indice
origine> aj <vecteur d'indices d'ajustage> pav <vecteur
d'indices de pavage correspondant à la 1ière dimension> <vecteur
d'indices de pavage correspondant à la 2nde dimension> …
<vecteur d'indices de pavage correspondant à la nième dimension>
array_in <nom du 2nd tableau d'entrée> org …
…


            array_out <nom du 1er tableau de sortie> org …
            array_out <nom du 2nd tableau de sortie> org …
            …
        end

            »
```

<nombre d'itérations 1ière dimension> est un entier représentant le nombre d'itération selon la première dimension de l'espace d'itération de la tâche <nom de la tâche>. Les nombres entiers compris entre les mots clefs do et using représentent l'espace d'itération de la tâche. La chaîne de caractères qui suit le mot clef **using** est le nom d'une transformation élémentaire déclarée plus haut dans le fichier en utilisant le mot clef **transfom.**

La chaîne de caractères qui suit le mot clef **array_in** ou **array_out** est le nom d'un tableau défini plus haut dans le fichier en utilisant le mot clef **array.**

Les vecteurs d'indices qui suivent les mots clefs **org, aj** et **pav** représentent respectivement l'origine, l'ajustage et le pavage. Le nombre de vecteurs d'indices qui suit le mot clef **pav** est égal au nombre de dimensions de l'espace d'itération de la tâche.

Par exemple, un tel fichier de description d'application peut être en utilisant cette syntaxe. Il comprend d'abord une description des tableaux donnant les noms, les dimensions des tableaux et le nombre d'éléments par dimension. Dans cet exemple, les tableaux sont des tableaux de nombres complexes appelés ECH, COEF, BF, REP, COMP, TWID et DOP :

```
        «
array of complex ECH 1536 8 32
dimensions cd ant rec

array of complex COEF 6 8
dimensions voie ant

array of complex BF 1536 6 32
```

```
      dimensions cd voie rec


  array of complexREP 20
      dimensions cd


  array of complex COMP 6 32 1536
      dimension voie rec cd


  array of complex TWID 512


  array of complex DOP 6 32 1536
      dimensions voie dop cd


          »
```

Puis le fichier comprend ensuite une déclaration des transformations élémentaire donnant le nom des transformations élémentaires et le nombre d'éléments des motifs opérandes et résultats. Dans cet exemple, les transformations élémentaires sont appelées Mulac et FFT:

```
          «

  TE Mulac
  in 8
  in 8
  out 8
  end

  TE FFT
  in 32
  in 32
  out 32
  end
          »
```

Puis le fichier comprend enfin une description des tâches donnant le nom des tâches, l'espace d'itération des tâches, le nom de la transformation élémentaire utilisée, le nom de tableaux d'entrée et de sortie utilisés, et les spécifications d'accès associées aux tableaux (origine, ajustage, pavage). Dans cet exemple, les tâches sont appelées FormationFaisceau, CompressionImpulsion et FiltreDoppler :

```
          «

  task FormationFaisceau
  do 1536 32 6
  using Mulac
  array_in ECH org (0,0,0) aj (0,1,0) pav (1,0,0) (0,0,1)
  (0, 0, 0)
  array_in COEF org (0,0,0) aj (0,1) pav (0,0) (0,0) (1,0)
  array_out BF org (0,0,0) aj (0,0,0) pav (1,0,0) (0,0,1)
  (0,1,0)
  end


  task CompressionImpulsion
  do 6 32 1536
  using Mulac
  array_in BF org (0, 0, 0) aj (1, 0, 0) pav (0, 1, 0) (0, 0, 1) (1,0,0)
  array_in REP org (0) aj (1) pav (0) (0) (0)
  array_out COMP org (0,0,0) aj (0,0,0) pav (1,0,0) (0,1,0)
  (0, 0, 1)
  end


  task FiltreDoppler
  do 6 1536
```

```
us ing FFT
array_in COMP org (0,0,0) aj (0,1,0) pav (1,0,0) (0,0,1)
array_in TWID org (0) aj (1) pav (0) (0)
array_out DOP org (0,0,0) aj (0,1,0) pav (1,0,0) (0,0,1)
end
```

»

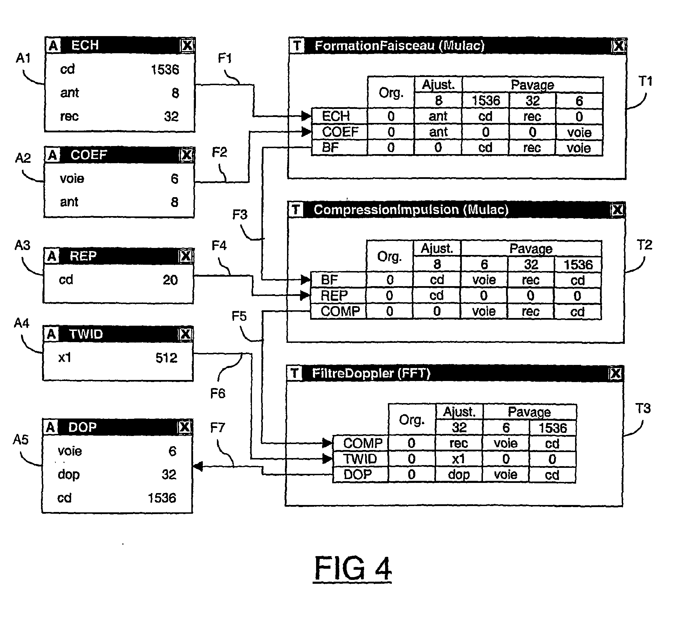

On se réfère aux figures 1 et 4. Au début du placement, l'utilisateur 106 ouvre une description de l'application 101 non placée telle que celle décrite dans le fichier de l'exemple précédent. L'atelier 100 peut présenter un graphique tel que celui illustré figure 4.

Ce graphique peut être généré par l'interface de saisie 102. Le graphique peut comprendre des fenêtres A1, A2, A3, A4, A5 représentant les tableaux ECH, COEF, REP, TWID et DOP. Dans ces fenêtres apparaissent les informations relatives aux tableaux, par exemple les noms des dimensions et le nombre d'éléments par dimension. Lorsqu'une dimension ne porte pas de nom dans le fichier de description de l'application 101, un nom arbitraire tel que « x1 » peut lui être attribué par l'atelier 100. Le graphique peut comprendre aussi des fenêtres T1, T2, T3 représentant les tâches FormationFaisceau, CompressionImpulsion et FiltreDoppler. Dans ces fenêtres apparaissent les informations relatives aux tâches, comme par exemple le nom de la transformation élémentaire utilisée, un tableau regroupant les informations concernant l'espace d'itération et les spécifications d'accès (origine, ajustage, pavage). Des flèches F1, F2, F3, F4, F5, F6, F7 peuvent être utilisées pour représenter les entrées et les sorties des données. Par exemple, les flèches F1 et F2 proviennent des fenêtres A1 et A2 et arrivent à la fenêtre T1. Ces flèches F1 et F2 signifient que les tableaux ECH et COEF sont des entrées de la tâche FormationFaisceau.

L'utilisateur partitionne alors les tâches suivant les données. En d'autres termes, l'utilisateur modifie l'espace d'itération des tâches. Il peut ajouter ou supprimer des dimensions à l'espace d'itération, tout en gardant le nombre total d'itérations constant. On rappelle que le nombre total d'itérations est le produit des nombres d'itérations des dimensions de l'espace d'itération.

On se réfère maintenant aux figures 1 et 5 et 6. En utilisant l'interface de saisie 102, l'utilisateur peut partitionner la tâche FormationFaisceau suivant les données en divisant l'une des dimensions de l'espace d'itération de la tâche par exemple. A cet effet, l'utilisateur peut sélectionner la colonne C1 de la fenêtre T1 et ouvrir une boîte de dialogue D1. Cette boîte de dialogue D1 permet de diviser l'une dimension de l'espace d'itération de la tâche FormationFaisceau (fenêtre T1) en plusieurs dimensions. La dimension de départ est alors divisée en plusieurs dimensions d'arrivée. Cette dimension de départ correspond à la colonne C1. A cet effet, l'utilisateur 106 saisit les nombres d'itérations d'arrivée correspondant aux nouvelles dimensions. Ces nombres d'itérations peuvent être séparés par une virgule. Dans cet exemple, la dimension sélectionnée comprend 32 itérations. L'utilisateur saisit « 8, 4 » dans la boîte de dialogue D1. La dimension de départ comprenant 32 itérations est divisée en deux dimensions d'arrivée comprenant respectivement 8 et 4 itérations. Lorsque l'utilisateur 101 divise une dimension de l'espace d'itération, il doit vérifier que le nombre total d'itérations reste constant. En d'autres termes, le produit des nombres d'itérations d'arrivée doit être égal au nombre d'itérations de départ. Selon un mode de réalisation avantageux, l'atelier 100 peut effectuer cette vérification.

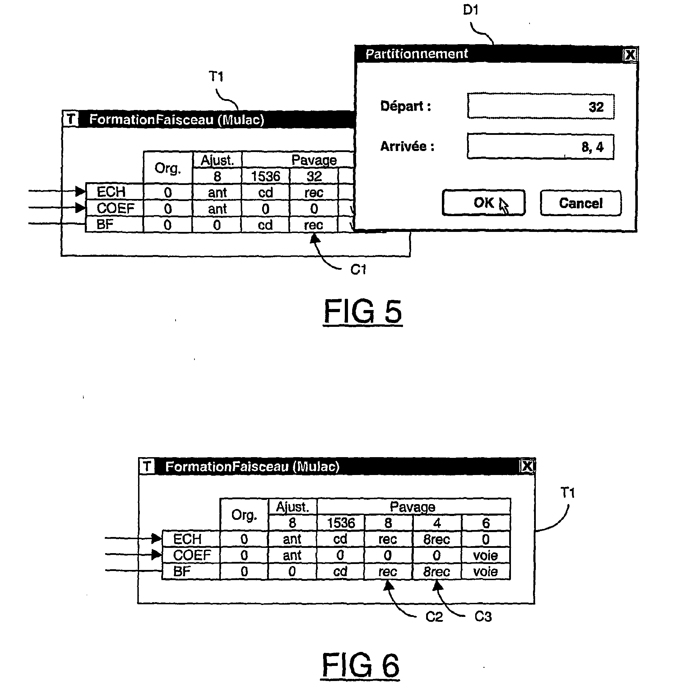

Le résultat de cette division est représenté sur la figure 6. L'espace d'itération d'arrivée de la tâche FormationFaisceau comprend 4 dimensions. Ces dimensions comprennent respectivement 1536, 8, 4 et 6 itérations. On peut représenter le nouvel espace d'itération par le n-uplet (1536, 8, 4, 6). Dans la fenêtre T1, ceci se traduit par l'apparition de deux nouvelles colonnes, C2 et C3, remplaçant la colonne C1. Le pavage est modifié pour les tableaux ECH et BF. Ces tableaux avaient le vecteur d'indices rec associé à la seconde dimension de l'espace d'itération de départ (colonne C1). Cette seconde dimension a été remplacée par deux dimensions (colonnes C2 et C3). Pour les tableaux ECH et BF, les vecteurs d'indices associés aux secondes et troisièmes dimensions de l'espace d'itération d'arrivée deviennent respectivement rec et 8rec.

Ainsi, pour le tableau ECH par exemple, la boucle de 32 itérations sur l'indice num_rec de pas 1, est remplacée par deux boucles imbriquées de respectivement 8 et 4 itérations sur l'indice num_rec. La première boucle de 8 itérations a un pas de 1. Cette boucle est répétée 4 fois par la seconde boucle. A chaque fois que la première boucle est répétée, l'indice num_rec a est incrémenté de 8. Le résultat des calculs réalisés par la tâche FormationFaisceau devant rester le même après le partitionnement, la seconde boucle sur l'indice num_rec a un pas de 8. Lors de la saisie avec la boîte de dialogue D1, l'ordre d'imbrication des boucles est déterminé de façon implicite par l'atelier. Cet ordre d'imbrication correspond dans notre exemple à l'ordre de saisie des dimensions d'arrivée. Ainsi, l'utilisateur a saisit « 8, 4 » dans la boîte de dialogue D1. Ceci signifie que la première boucle imbriquée comprend 8 itérations, et la seconde boucle imbriquée en comprend 4.

Une variante de réalisation avantageuse de l'atelier permet à l'utilisateur de spécifier explicitement l'ordre d'imbrication des boucles. A cet effet, l'utilisateur saisit par exemple le rapport entre le pas des boucles d'arrivées et le pas de la boucle de départ. Ces rapports peuvent être représentés par des nombres entre parenthèses. Ainsi, au lieu de saisir « 8, 4 » dans la boîte de dialogue D1, l'utilisateur pourra saisir de manière équivalente « 8(1), 4(8) » ou encore « 4(8), 8(1) ».

La spécification d'accès de la tâche FormationFaisceau avant d'être partitionnée peut être représentée dans le tableau suivant :

|  | Origine | Ajustage | Pavage | | |
|---|---|---|---|---|---|
| *Tableau* |  | **8** | **1536** | **32** | **6** |
| ECH | 0 | ant | cd | rec | 0 |
| COEF | 0 | ant | 0 | 0 | voie |
| BF | 0 | 0 | cd | rec | voie |

Après l'étape de partitionnement illustrée figures 5 et 6, la spécification d'accès devient :

|  | Origine | Ajustage | Pavage | | | |
|---|---|---|---|---|---|---|
| *Tableau* |  | **8** | **1536** | **8** | **4** | **6** |
| ECH | 0 | ant | cd | rec | 8rec | 0 |
| COEF | 0 | ant | 0 | 0 | 0 | voie |
| BF | 0 | 0 | cd | rec | 8rec | voie |

L'utilisateur affecte les tâches aux unités de calculs. L'espace d'itération des tâches à affecter a préalablement été partitionné. Cette partition de l'espace d'itération est telle qu'au moins une dimension puisse correspondre à un nombre d'unités de calcul d'un segment de l'architecture cible. L'architecture cible considérée est une architecture segment répétitive. Par conséquent, les unités de calculs sont agencées d'une manière régulière, de manière à pouvoir être regroupées dans des tableaux d'éléments identiques. Selon l'invention, l'affectation d'une tâche de calcul est réalisée en sélectionnant certaines dimensions de son espace d'itération d'une part, et en les faisant correspondre aux dimensions d'un tableau d'unités de calcul d'autre part. Les dimensions de l'espace d'itération sélectionnées lors de l'affectation, qui représentaient une répétition d'un calcul élémentaire, représentent alors une répartition dudit calcul entre les différentes unités de calcul. En d'autres termes, le calcul élémentaire de cette tâche est réalisée en parallèle par toutes les unités de calcul à laquelle la tâche a été affectée. Chaque unité de calcul répète le calcul élémentaire suivant les autres dimensions (non sélectionnées lors de l'affectation) de l'espace d'itération. Ainsi, on peut déterminer les données traitées en parallèles lors de chaque itération à partir des spécifications d'accès de la tâche (origine, ajustage, et pavage).

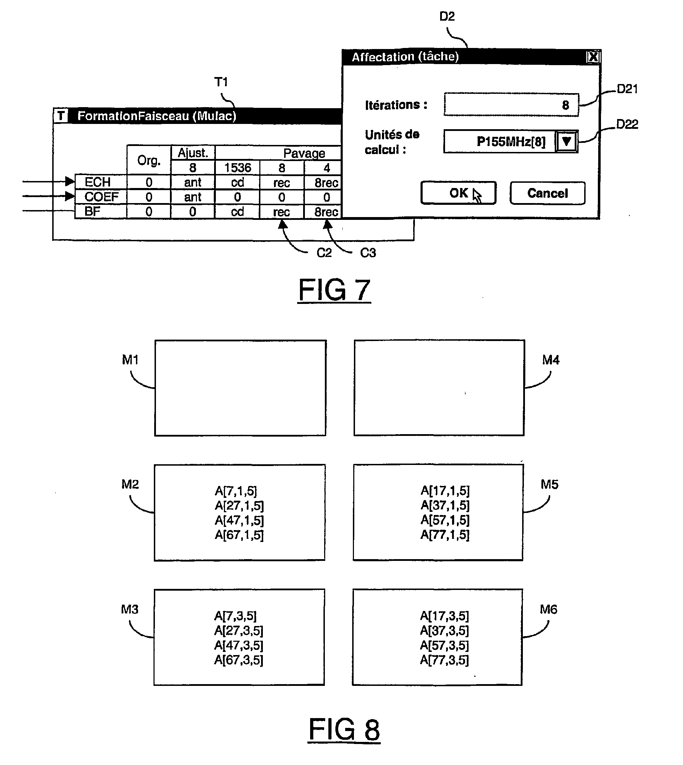

On se réfère maintenant à la figure 7 sur laquelle est illustrée une étape d'affectation d'une tâche de calcul. L'utilisateur sélectionne une ou plusieurs dimensions de l'espace d'itération de la tâche qu'il souhaite affecter à des unités de calcul. A cet effet, l'utilisateur sélectionne par exemple la colonne C2 de la fenêtre T1. Cette sélection correspond à la seconde dimension de l'espace d'itération de la tâche FormationFaisceau. Puis l'utilisateur ouvre une boîte de dialogue D2 lui permettant de réaliser l'affectation. Le nombre d'itérations correspondant à la dimension sélectionnées peut être rappelé dans un champ D21 de cette boîte de dialogue D2. Grâce au modèle de l'architecture cible 105 l'atelier peut afficher l'ensemble des segments disponibles, par exemple dans une liste déroulante D22 de la boîte de dialogue D2. L'utilisateur choisit par exemple un segment comprenant le même nombre d'éléments qu'il y a d'itérations par dimension, c'est à dire 8 éléments dans cet exemple. Ce segment peut être représenté par un tableau d'unités de calcul. Dans cet exemple, l'utilisateur choisit d'affecter la tâche FormationFaisceau à un segment de 8 unités de calcul représenté par le tableau P155MHz[8].

Les unités de calculs auxquelles a été affectée la tâche accèdent en lecture ou en écriture aux éléments des tableaux d'entrée et de sortie. Lors de l'exécution de l'application placée sur l'architecture cible, ces éléments seront stockés dans des mémoires de ladite architecture. Suite à une erreur de placement, il peut arriver que ces données soient stockées dans des mémoires inaccessibles aux unités de calcul. L'atelier fournit à l'utilisateur un moyen de vérifier l'accessibilité des données, et par conséquent d'éviter de telles erreurs de placement. Ces erreurs sont donc détectées à un stade précoce du développement, avant même la réalisation d'un premier prototype.

A cet effet, l'utilisateur spécifie la manière dont sont réparties les données dans les différentes mémoires de l'architecture cible. Cette spécification de la répartition des données peut se faire pour chaque tableau d'entrée ou de sortie des tâches. On appelle affectation d'un tableau à des mémoires cette spécification de la répartition des données contenues dans le tableau. L'architecture cible étant une architecture segment répétitive, les mémoires peuvent être regroupées dans des tableaux de mémoires identiques. Selon l'invention, l'affectation d'un tableau de données à des mémoires consiste à répartir une partie des données du tableau dans un tableau de mémoires.

La spécification de la répartition d'un tableau de données A dans un tableau de mémoires M peut se décomposer par exemple en quatre parties :

- La première partie est une référence à un élément du tableau A pris comme origine. Cette première partie est appelée l'origine tableau.
- La seconde partie est une référence à la mémoire du tableau M dans laquelle l'élément du tableau A correspondant à l'origine tableau est mémorisé. Cette seconde partie est appelée l'origine mémoire.
- La troisième partie permet de déterminer pour chaque mémoire du tableau M dans laquelle au moins un élément du tableau A est mémorisé, une référence à un premier élément du tableau A mémorisé dans ladite mémoire. Cette troisième partie est appelée le projecteur. La référence au premier élément du tableau A mémorisé dans la mémoire correspondant à l'origine mémoire est l'origine tableau. A partir de l'origine tableau, de l'origine mémoire, et du projecteur, il est possible de déterminer la référence au premier élément du tableau A mémorisé dans chacune desdites mémoires.
- La quatrième partie donne pour chaque mémoire du tableau M, à partir de la référence au premier élément du tableau A mémorisé dans ladite mémoire, l'ensemble des autres éléments mémorisés. Cette quatrième partie est appelée le motif local.

L'origine tableau, l'origine mémoire, le projecteur et le motif local peuvent être représentés avec des entiers et des vecteurs d'indices. On suppose dans l'exemple de représentation qui suit que la répartition est homogène. En d'autres termes, on suppose que le nombre d'éléments mémorisés du tableau A est le même dans chaque mémoire du tableau M. Il est possible bien entendu d'utiliser une autre représentation pour des répartitions inhomogènes.

On note les indices de tableau modulo le nombre d'éléments par dimension. Par exemple, pour une dimension d'un tableau comprenant 8 éléments, les indices 0, 8, 16, 24 représentent le même élément du tableau. De même, les indices 1, 9, 17, 25, ... représentent le même élément du tableau. Les indices 2, 10, 18, 26, ... représentent le même élément du tableau ...

La représentation peut être la suivante :

- l'origine tableau peut être représentée par un vecteur d'indices ORGA comprenant autant d'éléments que le tableau de données A a de dimensions ;
- l'origine mémoire peut être représentée par un vecteur d'indices ORGM comprenant autant d'éléments que le tableau de mémoires M a de dimensions ;
- le projecteur peut être représenté par des vecteurs d'indices VPR1, VPR2, VPR3, ... comprenant autant d'éléments que le tableau de données A a de dimensions d'une part, et des entiers NPR1, NPR2, NPR3, ... d'autre part, de manière à ce que le vecteur d'indices VPRi et l'entier NPRi soient associés à la $i^{\text{ème}}$ dimension du tableau M ;
- le motif local peut être représenté par des vecteurs d'indices VML1, VML2, VML3, ... comprenant autant d'éléments que le tableau de données A a de dimensions d'une part, et des entiers NML1, NML2, NML3, ... d'autre part.

A partir de cette représentation, on peut déterminer la répartition des éléments du tableau A mémorisés dans le tableau de mémoires M. La mémoire M[i1, i2, i3,...]contient NML1×NML2×NML3×...éléments du tableau A. Ces éléments vérifient la relation suivante :

$$A\left[\begin{array}{l} ORGA + (i1 - ORGM[0]) \times VPR1 + (i2 - ORGM[1]) \times VPR2 + ... \\ + n1 \times VML1 + n2 \times VML2 + n3 \times VML3... \end{array}\right] \quad (9)$$

où n1, n2, n3, ... sont des nombres entiers vérifiant les relations suivantes :

$$0 \le n1 < NML1 \qquad\qquad (10)$$

$$0 \leq n2 < NML2 \qquad\qquad (11)$$

$$0 \leq n3 < NML3 \qquad\qquad (12)$$

...

On se réfère maintenant à la figure 8 sur laquelle est représenté un exemple d'affectation d'un tableau de données A dans un tableau de mémoires M. Le tableau de données A peut avoir 3 dimensions, de taille 100, 200, et 300 par exemple. Le tableau de mémoires M peut avoir 2 dimensions, de taille 3 et 2. Le tableau de mémoires M comprend donc 6 mémoires M1, M2, M3, M4, M5, M6. Ces 6 mémoires sont ordonnées dans le tableau M de la manière suivante :

| M[0,0]=M1 | M[0,1]=M4 |
|---|---|
| M[1,0]=M2 | M[1,1]=M5 |
| M[2,0] = M3 | M[1,2]=M6 |

L'affectation est représentée par :

$$ORGA = (7, 1, 5) \qquad\qquad (13)$$

$$ORGM = (1, 0) \qquad\qquad (14)$$

$$NPR1 = 2 \qquad\qquad (15)$$

$$VPR1 = (0, 2, 0) \qquad\qquad (16)$$

$$NPR2 = 2 \qquad\qquad (17)$$

$$VPR2 = (10, 0, 0) \qquad\qquad (18)$$

$$NML1 = 4 \qquad\qquad (19)$$

$$VML1 = (20, 0, 0) \qquad\qquad (20)$$

La mémoire M2 correspond à l'origine mémoire ORGM définie dans la relation (14), c'est à dire l'élément M[1,0] du tableau M. Cette mémoire M2 comprend l'élément du tableau A correspondant à l'origine tableau ORGA définie dans la relation (13), c'est à dire l'élément A[7,1,5]. Le motif local NML1, VML1 permet de déterminer les autres éléments du tableau A contenus dans cette mémoire M2. Le saut d'indices entre ces éléments est donné par le vecteur d'indices VML1. On détermine les NML1-1 éléments suivants contenus dans cette mémoire M2 en utilisant le vecteur VML1. Ces éléments sontA[27,1,5], A[47,1,5] et A[67,1,5].

On peut déterminer le premier élément du tableau A contenu dans la mémoire M3 en utilisant le projecteur. Ce premier élément peut être référencé par le vecteur d'indices ORGA+VPR1, c'est à dire A[7,3,5]. On détermine les NML1-1 éléments suivants contenus dans cette mémoire M3 en utilisant le vecteur VML1. Ces éléments sont A[27,3,5], A[47,3,5], A[67,3,5].

De la même façon on peut déterminer le premier élément du tableau A contenu dans la mémoire M5 en utilisant le projecteur. Ce premier élément peut être référencé par le vecteur d'indices ORGA + VPR2, c'est à dire A[17,1,5]. On détermine les NML1-1 éléments suivants contenus dans cette mémoire M5 en utilisant le vecteur VML1. Ces éléments sont A[37,1,5], A[57,1,5], A[77,1,5].

De la même façon on peut déterminer le premier élément du tableau A contenu dans la mémoire M6 en utilisant le projecteur. Ce premier élément peut être référencé par le vecteur d'indices ORGA + VPR1 + VPR2 , c'est à dire A[17,3,5]. On détermine les NML1-1 éléments suivants contenus dans cette mémoire M5 en utilisant le vecteur VML1. Ces éléments sont A[37,3,5], A[57,3,5], A[77,3,5].

Dans cet exemple d'affectation, les mémoires M1 et M4 du tableau de mémoire M ne contiennent pas d'éléments du tableau A.

On se réfère maintenant aux figures 1, 9 et 10 sur lesquelles est illustrée une étape d'affectation du tableau de données ECH à un tableau de mémoires DPRAM. A cet effet, l'utilisateur sélectionne le tableau qu'il souhaite affecter, c'est à dire le tableau ECH. Puis l'utilisateur ouvre par exemple une boîte de dialogue D3 lui permettant de réaliser l'affectation. Cette boîte de dialogue peut contenir un champ D31 rappelant des informations sur le tableau à affecter, telles que le nom du tableau, les noms de ses dimensions, les tailles de ces dimensions. Dans cet exemple, le champ D31 contient la chaîne de caractères « ECH[cd :1536][ant :8][rec :32] », rappelant le nom « ECH » du tableau, les noms « cd », « ant », « rec » des dimensions, et leurs tailles « 1536 », « 8 », « 32 ». Grâce au modèle de l'architecture cible 105 l'atelier peut afficher l'ensemble des tableaux de mémoires disponibles, par exemple dans une liste déroulante D32. Il choisit dans cet exemple un tableau de 8 mémoires DR1, DR2, DR3, DR4, DR5, DR6, DR7, DR8, ordonnées dans un tableau à une dimension DPRam de la manière suivante :

| |
|---|
| DPRam[0] = DR1 |
| DPRam[1] = DR2 |
| DPRam[2] = DR3 |
| DPRam[3] = DR4 |
| DPRam[4] = DR5 |
| DPRam[5] = DR6 |
| DPRam[6] = DR7 |
| DPRam[7] = DR8 |

L'utilisateur peut saisir les informations concernant l'affectation du tableau de données ECH au tableau de mémoires DPRam dans la boîte de dialogue D3. Ces informations peuvent être représentées par l'origine tableau, l'origine mémoire, le projecteur, et le motif local, dans des champs D33, D34, D35, et D36 de la boîte de dialogue D3. L'origine tableau et l'origine mémoire dans cet exemple sont des vecteurs nuls. L'utilisateur saisit « 0 » ou de manière équivalente « (0,0,0) » dans le champ D33 de la boîte de dialogue D3. Il saisit « 0 » dans le champ D34. Le tableau de mémoires DPRam ayant une dimension, le projecteur est représenté par un entier et un vecteur d'indices. L'entier choisit est 8, ce qui correspond au nombre de mémoires du tableau. Par conséquent toutes les mémoires DR1, DR2, DR3, DR4, DR5, DR6, DR7, DR8 du tableau DPRam sont utilisées dans cet exemple. Le vecteur d'indices est (0,0,1) qui peut se noter aussi « rec ». Le projecteur est représenté par une chaîne de caractères. Cette chaîne de caractères comprend un entier et un vecteur d'indices séparés par le symbole « * », éventuellement séparés par une virgule des autres entiers et vecteurs d'indices. Les entiers et les vecteurs d'indices sont placés dans l'ordre des dimensions du tableau de mémoires. Dans cet exemple, le projecteur peut se noter « 8*rec ». Le motif local est représenté par une chaîne de caractères comprenant un entier et un vecteur d'indices séparés par le symbole « * », éventuellement séparés par une virgule des autres entiers et vecteurs d'indices suivants. Dans cet exemple, le motif local est représenté par la chaîne de caractères « 1536*cd, 8*ant, 4*8rec » dans le champ D36. Chacune des 8 mémoires comprend donc 1536x8x4, soit 49152 éléments du tableau de données ECH.

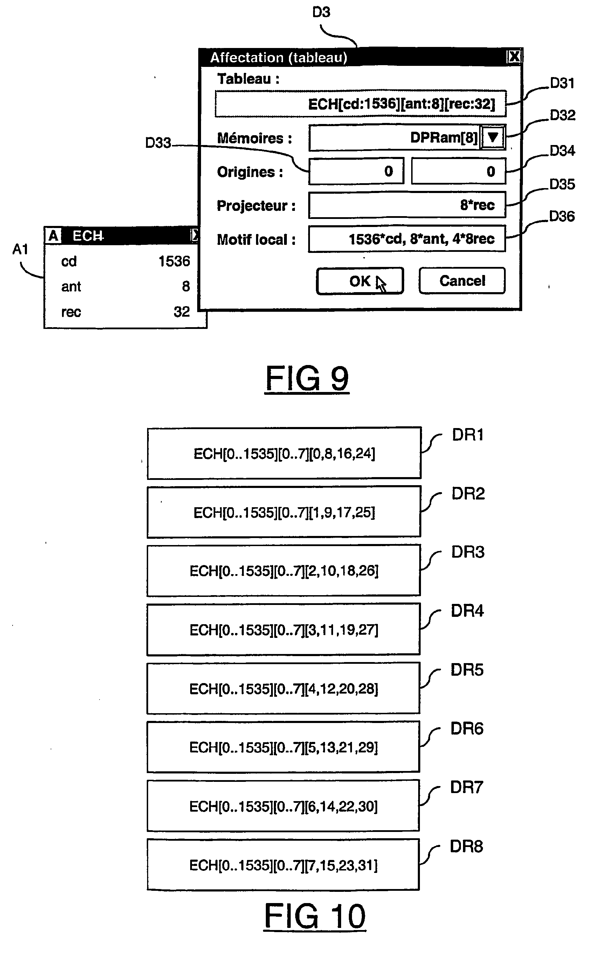

La répartition de ces données dans les mémoires DR1, DR2, DR3, DR4, DR5, DR6, DR7, DR8 du tableau de mémoires est illustrée figure 10. La mémoire DR1 comprend les éléments ECH[num_cd, num_ant, num_rec] dont les indices vérifient :

$$0 \le num\_cd < 1536 \qquad (21)$$

$$0 \le num\_ant < 8 \qquad (22)$$

$$num\_rec = 8 \times k \qquad (23)$$

$$0 \le k < 4 \qquad (24)$$

La mémoire DR2 comprend les éléments dont les indices vérifient les relations (21), (22), (24) et la relation suivante :

$$num\_rec = 8 \times k + 1 \qquad (25)$$

La mémoire DR3 comprend les éléments dont les indices vérifient les relations (21), (22), (24) et la relation suivante :

$$num\_rec = 8 \times k + 2 \qquad (26)$$

D'une manière générale, la mémoire DRi où i varie entre 1 et 8, comprend les éléments dont les indices vérifient les relations (21), (22), (24) et la relation suivante :

$$num\_rec = 8 \times k + i - 1 \qquad (27)$$

Selon un mode de réalisation avantageux de l'atelier, les tableaux de sortie des tâches de calcul sont automatiquement affectés à des mémoires déterminées. Ces mémoires sont celles associées aux unités de calculs auxquelles ont été affectés lesdites tâches de calcul. Par conséquent, l'utilisateur n'a besoin d'affecter que les tableaux servant uniquement d'entrée, c'est à dire ceux qui ne sont produits par aucune tâche de calcul. En d'autres termes, les données calculées sont automatiquement réparties dans les mémoires par l'atelier.

Entre plusieurs tâches de calcul accédant à des données communes, il peut y avoir des répartitions différentes desdites données dans des mémoires différentes. Par ailleurs, les mémoires auxquelles accèdent certaines unités de calculs n'ont pas toujours une capacité suffisante pour stocker les données nécessaires pour toutes les itérations d'une tâche de calcul. Il est par conséquent nécessaire d'effectuer des mouvements de données.

Selon l'invention, ces mouvements de données sont représentés par des tâches de communication. Une tâche de communication permet de changer l'emplacement mémoire des données d'un tableau. En d'autres termes, une tâche de communication permet de changer l'affectation d'un tableau de données. Une tâche de communication permet de déplacer la totalité des données d'un tableau, ou seulement une partie de ses données. Une tâche de communication correspond à une succession de mouvements élémentaires. Les mouvements élémentaires dans les tâches de communication sont l'équivalent des transformations élémentaires dans les tâches de calcul. Une tâche de communication accède en lecture à un tableau d'entrée, et en écriture à un tableau de sortie. Le tableau de sortie est une copie partielle ou totale du tableau d'entrée. Lors d'une communication, les données ne sont pas modifiées. Elles sont recopiées du tableau d'entrée vers le tableau de sortie. Cependant les répartitions des tableaux d'entrée et de sortie sont différentes. Par conséquent, lors de la copie des données du tableau d'entrée vers le tableau de sortie, il y a un mouvement desdites données d'une mémoire d'entrée vers une mémoire de sortie.

La tâche de communication est décrite à partir d'une spécification d'accès d'une part, et d'une spécification de mouvement d'autre part. La spécification d'accès peut être représentée avec des vecteurs d'indices correspondant à une origine, un ajustage et un pavage tels que ceux utilisés pour les tâches de calcul. L'origine, l'ajustage et le pavage permettent de déterminer quels éléments du tableau d'entrée et du tableau de sortie sont associés à un motif opérande et à un motif résultat. Les motifs opérandes et résultats sont associés à un mouvement élémentaire. Le mouvement élémentaire est un transfert d'un paquet de données. Les éléments du motif opérande contiennent les données à transférer lors d'un mouvement élémentaire. Le motif opérande peut être représenté par un tableau de données, généralement ayant plusieurs dimensions. Le motif résultat est la copie du motif opérande.

Le nombre d'éléments du motif opérande est égal aux nombre de données déplacées à chaque itération de la tâche de communication, c'est à dire par le mouvement élémentaire. La spécification de mouvement permet de déterminer la manière dont ces données se déplacent. En d'autres termes, la spécification de mouvement permet de déterminer pour chaque élément du motif opérande, la mémoire d'arrivée dans lequel l'élément correspondant du motif résultat sera copié. De même que la spécification de calcul d'une tâche de calcul, la spécification de mouvement s'exprime indépendamment de l'itération de la tâche de communication.

L'utilisateur de l'atelier peut donc créer des tâches de communication, ce qui lui permet de spécifier lui-même les mouvements de données. Ceci permet d'obtenir des placements beaucoup plus performant qu'avec les techniques de placement connues.

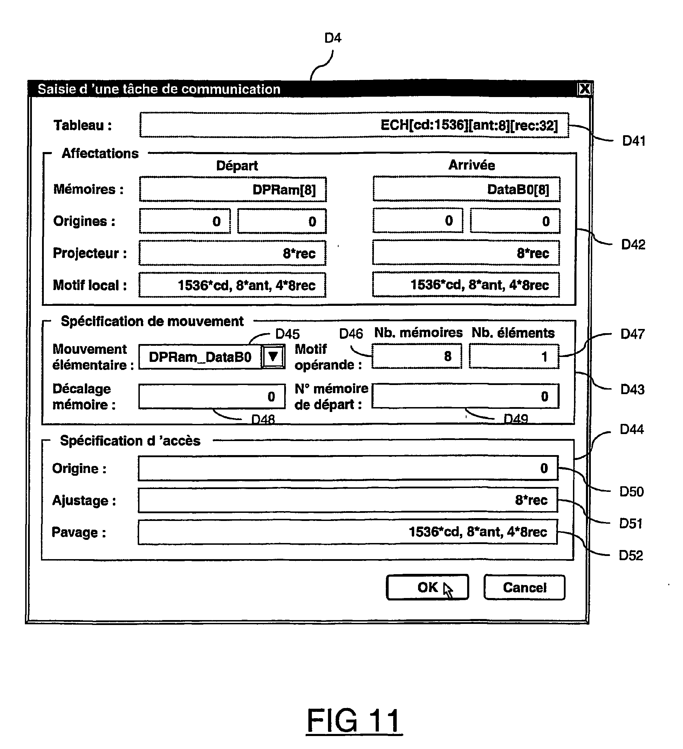

On se réfère maintenant à la figure 11 sur laquelle est illustré un exemple de création d'une tâche de communication avec l'atelier.

Dans cet exemple, l'utilisateur souhaite déplacer toutes les données du tableau ECH, affecté au départ au tableau DPRam de 8 mémoires (illustré figures 9 et 10), vers un tableau DataB0 de 8 mémoires. A cet effet, l'utilisateur sélectionne le tableau de départ et le tableau d'arrivée, copie du tableau de départ. Puis il ouvre une boîte de dialogue D4 pour créer une tâche de communication. Cette boîte de dialogue D4 comprend par exemple un champ D41 rappelant le nom et les dimensions du tableau de départ. Dans cet exemple, ce champ contient la chaîne de caractères « ECH [cd :1536][ant :8][rec :32] ». Cette boîte de dialogue peut aussi comprendre une zone D42 dans laquelle sont rappelées les informations relatives aux affectations de départ et d'arrivée, c'est à dire l'affectation du tableau de départ au tableau de mémoires mémoires DPRam, et l'affectation du tableau d'arrivée au tableau de mémoires DataB0. L'utilisateur peut saisir la spécification de mouvement et la spécification d'accès dans deux zones D43 et D44 de la boîte de dialogue D4.

Afin de saisir la spécification de mouvement, l'utilisateur peut choisir un mouvement élémentaire dans une liste déroulante D45 de la zone D43. Cette liste déroulante D45 contient un ensemble de mouvements élémentaires prédéfinis. Dans cet exemple, l'utilisateur choisit un mouvement élémentaire « DPRam_DataB0 » qui permet de déplacer des données à partir du tableau de mémoires DPRam vers le tableau de mémoires DataB0. Ce mouvement élémentaire utilise un motif opérande dont les dimensions peuvent être données dans deux champs D46 et D47 de la zone D43.

Le premier champ D46 comprend un ou plusieurs nombres entiers séparés par des virgules, chaque nombre représentant la taille d'une dimension du motif opérande. Toutes les dimensions du champ D46 correspondent à des dimensions du tableau de mémoires de départ. Dans cet exemple, le champ D46 contient la chaîne de caractères « 8 ». Par conséquent le motif opérande a une dimension de taille 8 correspondant à l'unique dimension du tableau de mémoires DPRam.

Le second champ D47 comprend un ou plusieurs nombres entiers séparés par des virgules, chaque nombre représentant la taille d'une dimension du motif opérande. Ces dimensions correspondent à des dimensions internes à l'une quelconque des mémoires du tableau de mémoires de départ. Le produit des nombres contenus dans le champ D47 est égal au nombre d'éléments du tableau de données contenus dans une mémoire du tableau de mémoires de départ. Dans cet exemple, le champ D47 contient la chaîne de caractères « 1 ». Par conséquent le motif opérande a un unique élément par mémoire. Le motif opérande est donc un tableau de 8 éléments à une dimension, chaque élément du motif opérande étant dans une mémoire différente du tableau DPRam[8].

Afin de préciser davantage la spécification de mouvement, l'utilisateur peut saisir le décalage mémoire et le numéro de la mémoire de départ dans deux champs D48 et D49 de la zone D43.

Afin de saisir la spécification d'accès de la tâche de communication, l'utilisateur saisit l'origine, l'ajustage et le pavage dans les champs D50, D51 et D52 de la zone D44. L'origine est un vecteur d'indices qui peut être le vecteur nul comme dans cet exemple, ou une combinaison linéaire des vecteurs cd, ant et rec dans cet exemple.

L'ajustage comprend autant de vecteurs d'indices que le motif opérande a de dimensions. L'ordre des vecteurs d'indices peut être celui des dimensions du motif opérande. L'utilisateur peut aussi saisir le nombre d'éléments associés par vecteur d'indices. Ce nombre d'éléments est égal à la taille de la dimension associée du motif opérande, qui correspond au nombre d'éléments à déplacer selon cette dimension. Dans cet exemple, le champ D51 contient la chaîne de caractères « 8*rec ». Le vecteur d'indice associé à l'unique dimension du motif opérande est rec. Le nombre d'éléments à déplacer selon cette dimension est 8.

Le pavage comprend plusieurs entiers correspondant à un nombre d'itérations, et des vecteurs d'indices associés à ces entiers. Le champ D52 contient la chaîne de caractères « 1536*cd, 8*ant, 4*8rec ». Il y a trois boucles imbriquées de respectivement 1536, 8 et 4 itérations. Les vecteurs d'indices associés à ces boucles sont respectivement cd, ant et 8rec.

La spécification d'accès de la tâche de communication saisie par l'utilisateur peut être représentée par le tableau suivant :

| | Origine | Ajustage | Pavage | | |
|---|---|---|---|---|---|
| | | *8* | *1536* | *8* | *4* |
| *Tableau* | | | | | |
| ECH | 0 | rec | cd | ant | 8rec |
| Copie de ECH | 0 | rec | cd | ant | 8rec |

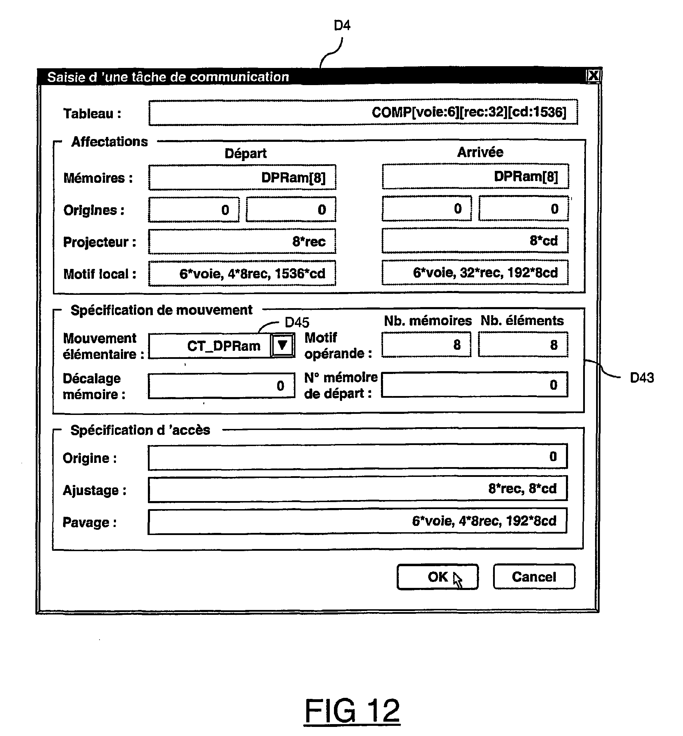

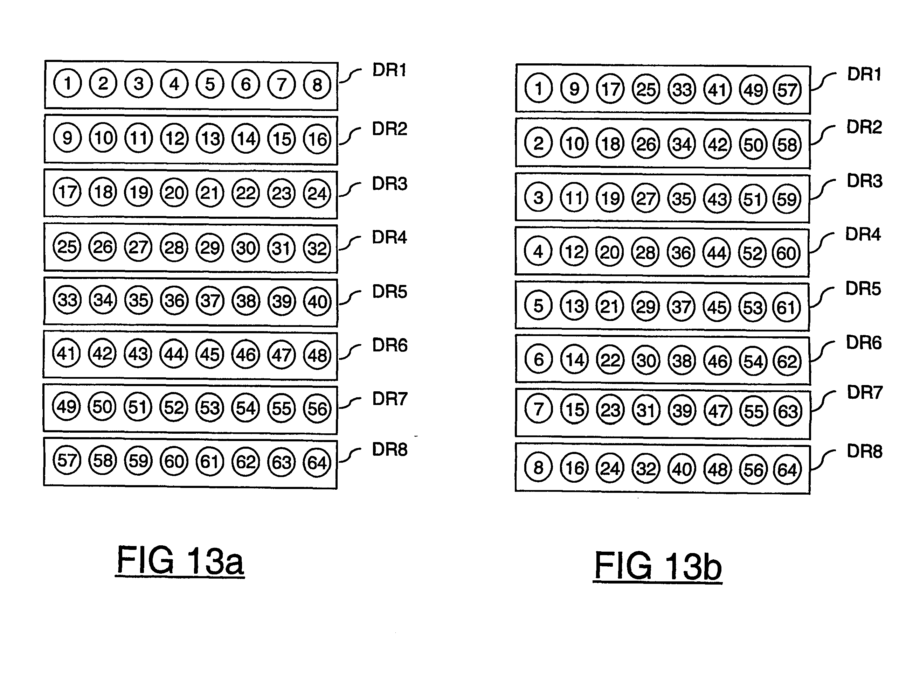

L'utilisateur peut saisir des tâches de communications plus complexes. On se réfère maintenant aux figures 12, 13a et 13b sur laquelle est illustré un autre exemple de création d'une tâche de communication.

Dans cet exemple, l'utilisateur souhaite changer l'arrangement des données du tableau COMP dans le tableau DPRam de 8 mémoires DR1, DR2, DR3, DR4, DR5, DR6, DR7, DR8. A cet effet, l'utilisateur sélectionne le tableau de départ et le tableau d'arrivée, copie du tableau de départ. Puis il ouvre la boîte de dialogue D4 pour créer une tâche de communication. Les champs de cette boîte de dialogue ont étés décrits figure 11. Dans cet exemple, le tableau de données intervenant dans la tâche de communication est le tableau COMP. Ce tableau a trois dimensions voie, rec et cd de taille 6, 32, 1536.

L'affectation de départ, c'est à dire l'affectation du tableau dont les données doivent être déplacées par la tâche de communication, peut être donnée par les relations suivantes :

$$ORGA = 0 \qquad (28)$$

$$ORGM = 0 \qquad (29)$$

$$NPR1 = 8 \qquad (30)$$

$$VPR1 = rec \qquad (31)$$

$$NML1 = 6 \tag{32}$$

$$VML1 = voie \tag{33}$$

$$NML2 = 4 \tag{34}$$

$$VML2 = 8rec \tag{35}$$

$$NML3 = 1536 \tag{36}$$

$$VML3 = cd \tag{37}$$

Par conséquent au départ, chaque mémoire DPRam[i] comprend les éléments COMP_num_voie, num_rec, num_cd] dont les indices vérifient les relations suivantes :

$$num\_rec = 8 \times k + i - 1 \tag{38}$$

$$0 \leq k < 4 \tag{39}$$

$$0 \leq num\_voie < 6 \tag{40}$$

$$0 \leq num\_cd < 1536 \tag{41}$$

L'affectation d'arrivée peut être donnée par les relations suivantes :

$$ORGA = 0 \tag{42}$$

$$ORGM = 0 \qquad (43)$$

$$NPR1 = 8 \qquad (44)$$

$$VPR1 = cd \qquad (45)$$

$$NML1 = 6 \qquad (46)$$

$$VML1 = voie \qquad (47)$$

$$NML2 = 32 \qquad (48)$$

$$VML2 = rec \qquad (49)$$

$$NML3 = 192 \qquad (50)$$

$$VML3 = 8cd \qquad (51)$$

Par conséquent à l'arrivée, chaque mémoire DPRam[i] comprend les éléments COMP[num_voie,num_rec, num_cd] dont les indices vérifient les relations suivantes :

$$num\_cd = 8 \times k + i - 1 \qquad (52)$$

$$0 \le k < 192 \qquad (53)$$

$$0 \leq num\_voie < 6 \qquad (54)$$

$$0 \leq num\_rec < 32 \qquad (55)$$

La tâche de communication permettant de passer de l'affectation de départ à l'affectation d'arrivée doit permuter les dimensions rec et cd du projecteur. Afin de saisir la spécification de mouvement, l'utilisateur choisit un mouvement élémentaire dans la liste déroulante D45 de la zone D43. Dans cet exemple, l'utilisateur choisit un mouvement élémentaire « CT_DPRam » qui permet permuter les dimensions d'un tableau de données à deux dimensions affecté à un tableau de mémoires à une dimension.

Les figures 13a et 13b illustrent ce mouvement élémentaire. Le motif opérande correspondant à ce mouvement élémentaire est un tableau à deux dimensions, chaque dimension ayant une taille de 8. Les éléments du motifs opérande sont répartis par groupe de 8 dans chacune de 8 mémoires DR1, DR2, DR3, DR4, DR5, DR6, DR7, DR8. On utilise dans cet exemple les indices i et j pour faire référence à la première et la seconde dimension du motif opérande. On a numéroté dans la figure 13a les éléments du motif opérande de 1 à 64. Le numéro n de l'élément du motif opérande est lié aux indices i et j par la relation suivante :

$$n = 8 \times i + j + 1 \qquad (56)$$

La répartition des éléments du motif opérande est illustrée figure 13a. La mémoire DR1 contient les éléments 1 à 8 du motif opérande, c'est à dire ceux pour lesquels l'indice i vaut 0. La mémoire DR2 contient les éléments 9 à 16 du motif opérande, c'est à dire ceux pour lesquels l'indice i vaut 1. La mémoire DR3 contient les éléments 17 à 24 du motif opérande, c'est à dire ceux pour lesquels l'indice i vaut 2. La mémoire DR4 contient les éléments 25 à 32 du motif opérande, c'est à dire ceux pour lesquels l'indice i vaut 3.... La mémoire DR8 contient les éléments 57 à 64 du motif opérande, c'est à dire ceux pour lesquels l'indice i vaut 7.

Le motif résultat est une copie du motif opérande. On utilise la même numérotation et les même indices pour faire référence aux éléments du motif résultat. La répartition des éléments du motif résultat est illustrée figure 13b. La mémoire DR1 contient les éléments 1, 9, 17, 25, 33, 41, 49, 57 du motif résultat, c'est à dire ceux pour lesquels l'indice j vaut 0. La mémoire DR2 contient les éléments 2, 10, 18, 26, 34, 42, 50, 58 du motif résultat, c'est à dire ceux pour lesquels l'indice j vaut 1. La mémoire DR3 contient les éléments 3, 11, 19, 27, 35, 43, 51, 59 du motif résultat, c'est à dire ceux pour lesquels l'indice j vaut 2. La mémoire DR4 contient les éléments 4, 12, 20, 28, 36, 44, 52, 60 du motif résultat, c'est à dire ceux pour lesquels l'indice j vaut 3.... La mémoire DR8 contient les éléments 8, 16, 24, 32, 40, 48, 56 du motif résultat, c'est à dire ceux pour lesquels l'indice j vaut 7.

Lors du mouvement élémentaire permettant de copier les éléments du motif opérande dans le motif résultat, les éléments mémorisés dans chaque mémoire sont répartis dans l'ensemble des mémoires. Par exemple, les éléments 1, 2, 3, 4, 5, 6, 7, 8 du motif opérande mémorisés dans la mémoire DR1 sont répartis dans les mémoires DR1, DR2, DR3, DR4, DR5, DR6, DR7, DR8.

L'utilisateur saisit l'origine, l'ajustage et le pavage de cette tâche de communication. Dans cet exemple, l'origine, l'ajustage et le pavage sont les suivants :

|  | *Origine* | *Ajustage* | | *Pavage* | | |
|---|---|---|---|---|---|---|
| *Tableau* |  | **8** | **8** | **4** | **6** | **192** |
| COMP | 0 | rec | cd | 8rec | voie | 8cd |
| Copie de COMP | 0 | rec | cd | 8rec | voie | 8cd |

On appelle cette tâche de communication une transposition ou encore une permutation car deux dimensions d'un tableau ont été permutées dans les mémoires. Ces dimensions sont dans cet exemple rec et cd.

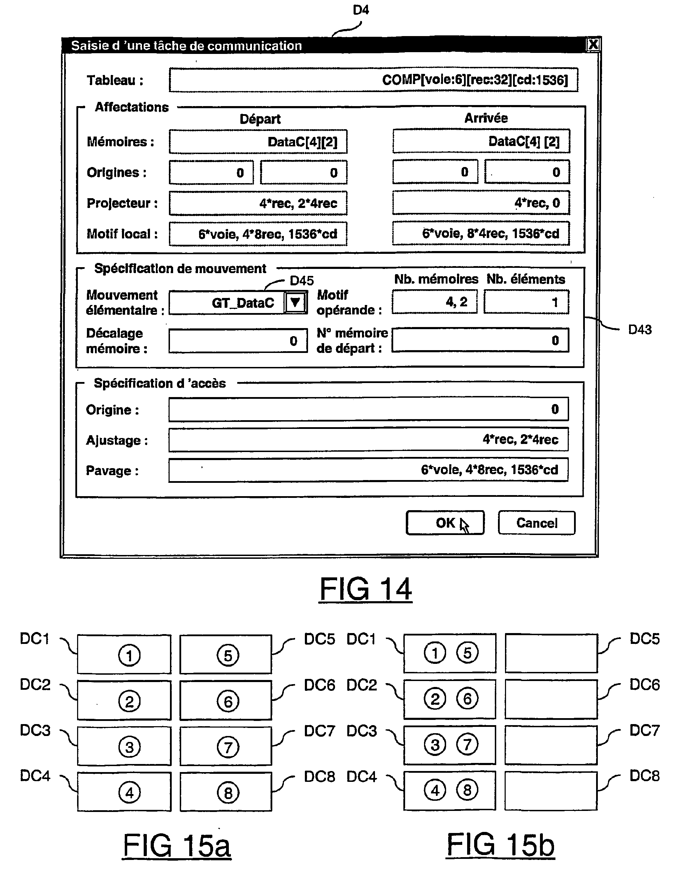

On se réfère maintenant aux figures 14, 15a et 15b sur lesquelles est illustré un autre exemple de création d'une tâche de communication.

Dans cet exemple, l'utilisateur souhaite regrouper les données du tableau COMP, réparties initialement sur un tableau DataC de 8 mémoires DC1, DC2, DC3, DC4, DC5, DC6, DC7, DC8 dans 4 de ces mémoires DC1, DC2, DC3, DC4 appartenant à la même dimension. Le tableau DataC est un tableau à 2 dimensions. La première dimension a une taille de 4. La seconde dimension a une taille de 2. Les 8 mémoires sont ordonnées dans le tableau DataC de la manière suivante :

| | |
|---|---|
| DataC[0][0] = DC1 | DataC[0][1] = DC5 |
| DataC[1][0] = DC2 | DataC[1][1] = DC6 |
| DataC[2][0] = DC3 | DataC[2][1] = DC7 |
| DataC[3][0] = DC4 | DataC[3][1] = DC8 |

A cet effet, l'utilisateur sélectionne le tableau de départ COMP et le tableau d'arrivée, copie du tableau de départ. Puis il ouvre une boîte de dialogue pour créer une tâche de communication.

Au départ, chaque mémoire DataC[i,j] comprend les éléments COMP[num_voie, num_rec, num_cd] dont les indices vérifient les relations suivantes :

$$0 \leq num\_voie < 6 \qquad (57)$$

$$num\_rec = 8 \times k + i + 4 \times j \qquad (58)$$

$$0 \leq k < 4 \qquad (59)$$

$$0 \leq num\_cd < 1536 \qquad (60)$$

A l'arrivée, chaque mémoire DataC[i,0] comprend les éléments COMP[num_voie, num_rec, num_cd] dont les indices vérifient les relations suivantes :

$$0 \leq num\_voie < 6 \qquad (61)$$

$$num\_rec = 4 \times k + i \qquad (62)$$

$$0 \leq k < 8 \qquad (63)$$

$$0 \leq num\_cd < 1536 \qquad (64)$$

La tâche de communication permettant de passer de l'affectation de départ à l'affectation d'arrivée doit regrouper dans une même mémoire certains éléments du tableau COMP initialement mémorisés dans des mémoires différentes. Afin de saisir la spécification de mouvement correspondant à cette tâche, l'utilisateur choisit un mouvement élémentaire dans la liste déroulante D45 de la zone D43. Dans cet exemple, l'utilisateur choisit un mouvement élémentaire « GT_DataC » illustré figures 15a et 15b.

Le motif opérande correspondant à ce mouvement élémentaire est un tableau à deux dimensions. La première dimension a une taille de 4. La seconde dimension a une taille de 2. Les éléments du motif opérande illustrés figure 15a sont répartis dans les mémoires DC1, DC2, DC3, DC4, DC5, DC6, DC7, DC8. On utilise dans cet exemple les indices i et j pour faire référence à la première et la seconde dimension du motif opérande. On a numéroté dans la figure 15a les éléments du motif opérande de 1 à 8. Le numéro n de l'élément du motif opérande est lié aux indices i et j par la relation suivante :

$$n = i + 4 \times j + 1 \qquad (65)$$

La répartition des éléments du motif opérande est illustrée figure 15a. La mémoire DC1 contient l'élément 1 du motif opérande, c'est à dire celui pour lequel i vaut 0 et j vaut 0. La mémoire DC2 contient l'élément 2 du motif opérande, c'est à dire celui pour lequel i vaut 1 et j vaut 0. La mémoire DC3 contient l'élément 3 du motif opérande, c'est à dire celui pour lequel i vaut 2 et j vaut 0. La mémoire DC4 contient l'élément 4 du motif opérande, c'est à dire celui pour lequel i vaut 3 et j vaut 0. La mémoire DC5 contient l'élément 5 du motif opérande, c'est à dire celui pour lequel i vaut 0 et j vaut 1. La mémoire DC6 contient l'élément 6 du motif opérande, c'est à dire celui pour lequel i vaut 1 et j vaut 1. La mémoire DC7 contient l'élément 7 du motif opérande, c'est à dire celui pour lequel i vaut 2 et j vaut 1. La mémoire DC8 contient l'élément 8 du motif opérande, c'est à dire celui pour lequel i vaut 3 et j vaut 1.

Le motif résultat est une copie du motif opérande. On utilise la même numérotation et les mêmes indices pour faire référence aux éléments du motif résultat. La répartition des éléments du motif résultat est illustrée figure 15b. La mémoire DC1 contient les éléments 1 et 5 du motif résultat, c'est à dire ceux pour lesquels l'indice i vaut 0. La mémoire DC2 contient les éléments 2 et 6 du motif résultat, c'est à dire ceux pour lesquels l'indice i vaut 1. La mémoire DC3 contient les éléments 3 et 7 du motif résultat, c'est à dire ceux pour lesquels l'indice i vaut 2. La mémoire DC4 contient les éléments 4 et 8 du motif résultat, c'est à dire ceux pour lesquels l'indice i vaut 3.

Lors du mouvement élémentaire permettant de copier les éléments du motif opérande dans le motif résultat, les éléments mémorisés dans les mémoires DC5, DC6, DC7, DC8 sont déplacés dans les mémoires DC1, DC2, DC3, DC4.

L'utilisateur saisit l'origine, l'ajustage et le pavage de cette tâche de communication. Dans cet exemple, l'origine, l'ajustage et la pavage sont les suivants :

| | Origine | Ajustage | | Pavage | | |
|---|---|---|---|---|---|---|
| *Tableau* | | **4** | **2** | **6** | **4** | **1536** |
| COMP | 0 | rec | 4rec | voie | 8rec | cd |
| Copie de COMP | 0 | rec | 4rec | voie | 8rec | cd |

Selon un mode de réalisation avantageux, l'atelier peut effectuer des vérifications lors de la saisie d'une tâche de communication, et indiquer les éventuelles erreurs par un message d'erreur par exemple. Ces erreurs peuvent par exemple concerner la spécification d'accès. L'ajustage saisit par l'utilisateur peut être incompatible avec le motif opérande par exemple si le nombre d'éléments intervenant dans l'ajustage est différent du nombre d'éléments du motif opérande. Ces erreurs peuvent concerner la spécification de mouvement. Le mouvement élémentaire choisi par l'utilisateur peut être incompatible avec l'affectation de départ par exemple si les mémoires impliquées dans l'affectation et le mouvement élémentaire sont différentes au départ.

Selon une autre variante avantageuse, l'utilisateur peut saisir des mouvements élémentaires non présents initialement dans la liste déroulante D45 de la zone D43 de la boîte de dialogue D4. Ces nouveaux mouvements élémentaires peuvent alors être ajoutés à la liste déroulante.

Les mémoires auxquelles les unités de calcul peuvent accéder rapidement ont souvent des capacités limitées. Ces mémoires sont par exemple les mémoires internes des microprocesseurs. Les tableaux d'entrée ou de sortie ont par conséquent souvent trop d'éléments pour pouvoir être mémorisés intégralement dans ces mémoires. Il possible de diviser une tâche de calcul accédant à des tableaux trop volumineux, de manière à transférer les tableaux dans les mémoires en plusieurs fois sans dépasser la capacité desdites mémoires. On utilise par exemple une première mémoire ou tableau de mémoires de grande capacité pour mémoriser l'intégralité des tableaux, et une seconde mémoire ou tableau de mémoires accessible aux unités de calcul. La capacité de la seconde mémoire ou tableau de mémoires est inférieure à celle de la première mémoire ou tableau de mémoires. On transfère une partie des tableaux d'entrée de cette première mémoire vers la seconde mémoire pour effectuer les calculs. Une fois les calculs effectués, on transfère le résultat des calculs de la seconde mémoire vers la première mémoire dans les tableaux de sortie. On répète ces transferts et ces calculs sur l'ensemble des tableaux d'entrée et de sortie. Ce procédé de transfert par partie pour effectuer des calculs est connu sous le nom de « swap » dans la littérature anglo-saxonne.

Selon une variante avantageuse de l'invention, l'utilisateur peut saisir des tâches faisant appel à d'autres tâches de communication et/ou de calcul. On nomme ces tâches des tâches d'appel. Une tâche d'appel permet de répéter un appel à d'autres tâches de calcul ou de mouvement par exemple. Une tâche d'appel peut aussi répéter un appel à d'autres tâches d'appel. L'espace d'itération de la tâche d'appel contient une ou plusieurs dimensions. Toutes les dimensions de l'espace d'itération de la tâche d'appel sont contenues dans les espaces d'itération des tâches appelées. Les tableaux d'entrée des tâches appelées sont les tableaux d'entrée de la tâche d'appel. Les tableaux de sortie des tâches appelées non utilisés uniquement comme tableau d'entrée de l'une des tâches appelées sont les tableaux de sortie de la tâche d'appel.

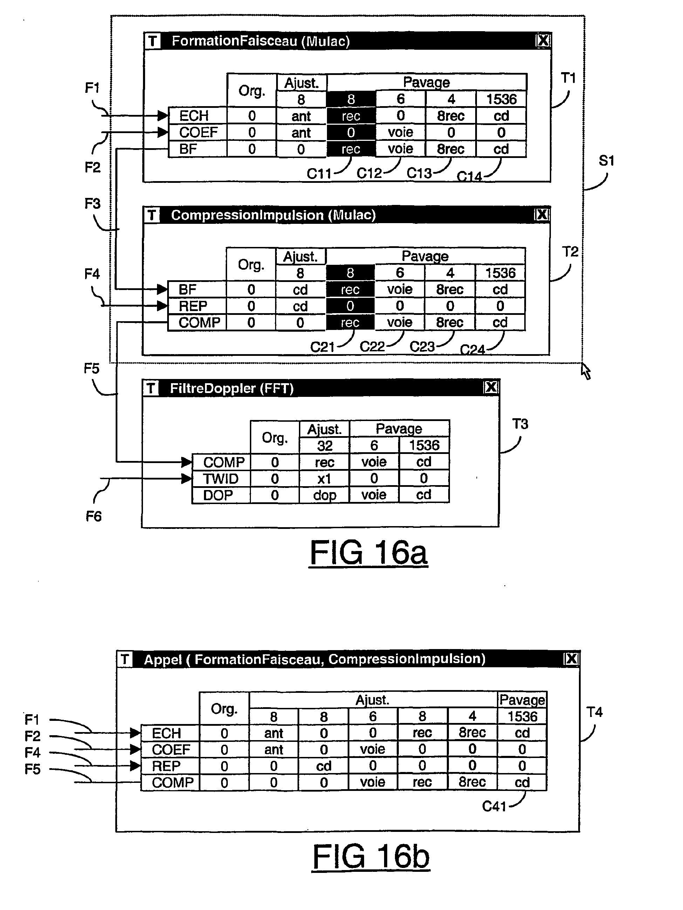

On se réfère aux figures 16a et 16b sur lesquelles est illustrée la création d'une tâche d'appel. Dans cet exemple, l'utilisateur souhaite créer une tâche appelant la tâche FormationFaisceau représentée par la fenêtre T1 d'une part, et appelant la tâche CompressionImpulsion représentée par la fenêtre T2 d'autre part. A cet effet, il sélectionne les deux fenêtres T1 et T2 avec un rectangle de sélection S1 fait à la souris par exemple. Ce rectangle de sélection englobe les deux fenêtres T1 et T2. Ce rectangle permet de matérialiser les entrées et les sorties de la tâche d'appel. Ainsi, les flèches F1, F2, et F4 correspondent aux entrées de la tâche d'appel qui va être créé. La flèche F5 correspond à la sortie de la tâche d'appel qui va être créée. Les tableaux d'entrée de la tâche d'appel seront donc ECH, COEF, et REP. Le tableau COMP sera le tableau de sortie de cette tâche d'appel.

L'espace d'itération de la tâche FormationFaisceau comprend dans cet exemple 4 dimensions représentées par les colonnes C11, C12, C13, C14. L'espace d'itération de la tâche CompressionImpulsion comprend dans cet exemple 4 dimensions représentées par les colonnes C21, C22, C23, C24. Les dimensions correspondant aux colonnes C11 et C21 ont été déjà affectées à des unités de calcul lors d'étapes précédentes d'affectation. Les colonnes C11 et C21 peuvent être représentées de manière différente en utilisant un fond sombre au lieu d'un fond clair, de manière à rappeler à l'utilisateur que les dimensions correspondant à ces colonnes ont déjà été affectées à des unités de calcul. Ces dimensions ne pourront pas être des dimensions de l'espace d'itération de la tâche d'appel. En effet, elle ne correspondent plus à une répétition d'une opération, mais à une répartition de cette opération sur plusieurs unités de calcul.

L'utilisateur ouvre une boîte de dialogue, non représentée, afin de saisir l'espace d'itération de la nouvelle tâche d'appel, en indiquant la correspondance entre les dimensions de cet espace d'itération et les dimensions des espaces d'itération des tâches appelées. A cet effet, l'utilisateur peut placer les colonnes C11, C12, C13, C14 et C21, C22, C23, C24 des fenêtres T1 et T2 dans un ordre déterminé, de telle sorte que les colonnes les plus à droite des correspondent dans l'ordre aux colonnes de l'espace d'itération de la nouvelle tâche d'appel. L'utilisateur n'a alors plus qu'à saisir le nombre de dimensions de l'espace d'itération de la tâche d'appel. Dans cet exemple, l'espace d'itération de la tâche d'appel comprend une dimension. Cette dimension de l'espace d'itération de la tâche d'appel correspond aux colonnes C14 et C25 des fenêtres T1 et T2.

La tâche d'appel créée est alors représentée par une nouvelle fenêtre T4 illustrée figure 16b. Cette nouvelle fenêtre T4 remplace les fenêtres T1 et T2 de la figure 16a. L'espace d'itération de cette tâche d'appel a une seule dimension représentée par une colonne C41. Les autres dimensions des espaces d'itération des tâches appelées deviennent des dimensions de l'ajustage de cette nouvelle tâche.

L'utilisateur peut répéter les différentes opérations de partitionnement, d'affectation et de création de tâches jusqu'à obtenir un placement correct. Au début du placement, il n'y a que des tâches de calcul. Puis l'utilisateur ajoute des tâches de communication et des tâches d'appel. Toutes ces tâches ont une structure générale commune qui permet à l'utilisateur de les manipuler de la même façon. En particulier, ceci permet à l'utilisateur de regrouper des tâches de communication et des tâches de calcul dans une même tâche d'appel. En faisant de tels regroupements, l'utilisateur peut éviter d'avoir recours à des procédés de « swap ». En effet, l'utilisateur peut tirer parti d'une symétrie des calculs pour faire effectuer des calculs en cascades sur des blocs de données. A cet effet, il regroupe les différents calculs représentés par plusieurs tâches de calculs, dans une seule tâche d'appel.

Dans l'exemple illustré figures 16a et 16b, l'utilisateur a regroupé deux calculs, ce qui permet d'éviter d'avoir recours à un procédé de « swap » pour mémoriser les éléments du tableau BF. Ces éléments seront calculés, mémorisés de façon temporaire dans des petites mémoires accessibles aux unités de calcul, puis utilisées. Dans un placement classique, ces données auraient été mémorisées dans une autre mémoire plus importante, mais non accessible aux unités de calcul. L'invention permet de rendre les placements plus performants en réduisant le nombre de communications nécessaires. Dans cet exemple, les communications économisées sont celles permettant de transférer les données du tableau BF calculées par la tâche FormationFaisceau dans une mémoire ayant une grande capacité d'une part, et la communication permettant de transférer les données du tableau BF stockées dans cette mémoire pour leur utilisation par la tâche CompressionImpulsion d'autre part. L'atelier permet donc à l'utilisateur d'optimiser les mouvements de données.

L'utilisateur peut partitionner l'espace d'itération des tâches d'appel en plusieurs dimensions de manière à en regrouper dans une autre tâche d'appel. Une tâche d'appel peut appeler une autre tâche d'appel, laquelle à son tour peut appeler une autre tâche d'appel. On peut définir une hiérarchie de tâches, le niveau hiérarchique d'une tâche dépendant du niveau d'imbrication de la tâche. Les tâches de calcul ou de communication sont les tâches de plus bas niveau. Ce niveau peut être numéroté zéro (0). Une tâche d'appel appelant une tâche de niveau n appartient au niveau supérieur n+1. Ainsi, une tâche d'appel appelant des tâches de calcul est de niveau 1. Lorsqu'une tâche appelle des tâches de niveaux différents, c'est la tâche dont le niveau est le plus élevé qui est utilisé pour déterminer le niveau de la tâche d'appel.

L'ensemble des tâches de niveau plus élevé est d'abord présenté à l'utilisateur par l'interface de saisie. Lorsque l'utilisateur souhaite modifier une tâche de niveau inférieur, il peut par exemple double cliquer sur la fenêtre représentant la tâche d'appel (celle de niveau plus élevé). Cette fenêtre est alors remplacée par les fenêtres représentant les tâches appelées. L'utilisateur répète cette opération jusqu'à arriver à la tâche appelée qui l'intéresse. L'utilisateur peut alors modifier les paramètres de tâche appelée. Toutes les tâches appelées par une tâche d'appel ont au moins une dimension de l'espace d'itération correspondant une dimension de l'espace d'itération de la tâche d'appel. Si l'utilisateur modifie (en partitionnant par exemple) cette dimension pour l'une des tâches, il doit effectuer la même modification pour toutes les autres tâches. De manière à éviter des erreurs, ces modifications peuvent être interdites par l'atelier dans les tâches appelées une fois la tâche d'appel créée. Si l'utilisateur souhaite modifier cette dimension, il pourra alors le faire à partir de la fenêtre représentant la tâche d'appel.

Une fois l'application placée sur l'architecture cible, l'utilisateur peut la tester avec une simulation comportementale. Le moteur de simulation intégré à l'atelier permet de vérifier le temps d'exécution de l'application sur l'architecture cible, l'utilisation des ressources et notamment le taux de remplissage des mémoires. Plus le modèle de l'architecture est détaillé, plus les résultats sont fins.

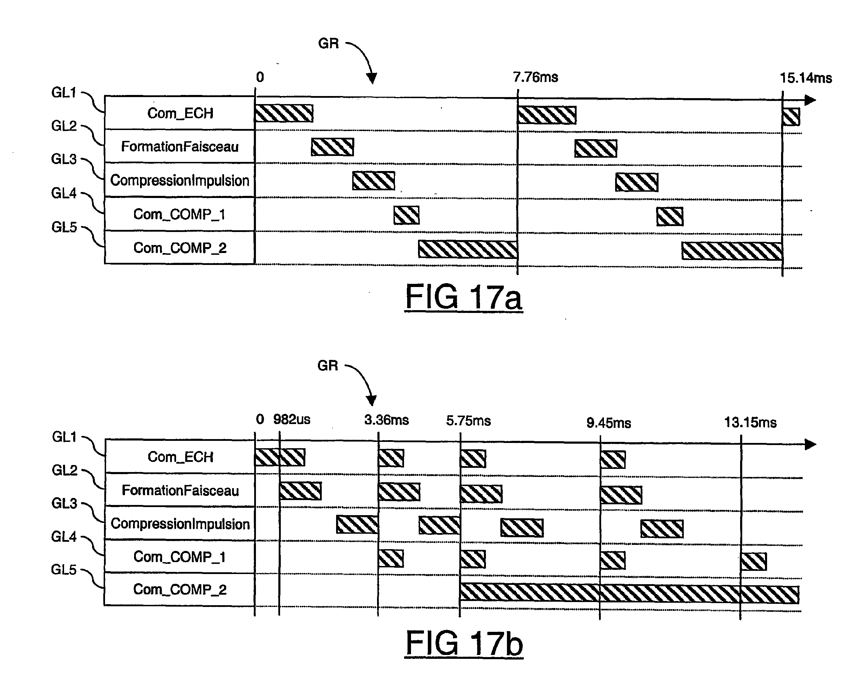

On se réfère aux figures 17a et 17b sur lesquelles sont représentés des résultats de simulation du temps d'exécution. Ces résultats peuvent être affichés par l'interface de présentation 104 de l'atelier.

Les résultats de cette simulation peuvent être présentés sous la forme d'un graphique GR. Ce graphique GR est un chronogramme représentant le temps d'exécution de tâches de calcul ou de communication par exemple. Le temps y est représenté selon un axe horizontal. L'exécution des différentes tâches est représentée sur des lignes GL1, GL2, GL3, GL4, GL5 du graphique. Sur la figure 17a, le chronogramme correspond à une application placée mais très peu optimisée. En utilisant l'atelier, l'utilisateur optimise le placement de son application. Le résultat de la simulation de cette application mieux placée est illustré figure 17b.

Grâce à l'invention, ces simulations sont rapides une fois l'application placée avec l'atelier. En effet, les informations de placement sont directement utilisées avec le modèle de l'architecture par le moteur de simulation. Ainsi, il n'est pas nécessaire de développer un atelier de simulation pour tester le placement.

L'utilisateur voit directement l'impact de ses choix sur les performances de l'application placée. Par conséquent il peut réaliser un placement optimisé très rapidement.

Par ailleurs, les informations de placement peuvent être réutilisées si une partie de l'architecture est modifiée sans que sa structure soit modifiée. Il suffit alors de modifier le modèle de l'architecture. Ceci permet de tester les performances d'une application déjà placée, ayant déjà été implantée sur une architecture cible particulière, lorsqu'un composant de ladite architecture est remplacé par un autre.

Bien entendu, l'invention ne se limite pas à cet exemple de mise en oeuvre. Les informations de placement peuvent être présentées sous une autre forme. Le modèle de l'architecture peut être stocké dans un fichier utilisé par l'atelier, et non faire partie de l'atelier. Le moteur de simulation peut être un programme de simulation externe.

**Revendications**

**1.** Procédé de placement d'applications multiprocesseurs sur une architecture cible, **caractérisé en ce qu'**il comprend au moins les étapes suivantes :

(a) une étape de partitionnement suivant les données d'une application préalablement partitionnée en tâches de calcul ;

(b) une étape d'affectation desdites tâches de calcul, partitionnées suivant les données, à des unités de calcul de l'architecture cible ;

(c) une étape de saisie de tâches de communication, lesdites tâches de communication permettant de copier totalement ou partiellement les données d'un tableau départ vers un tableau d'arrivée, ledit tableau de départ affecté à des mémoires de départ de l'architecture cible, ledit tableau d'arrivée étant affecté à des mémoires d'arrivée de l'architecture cible.

2. Procédé selon la revendication 1 **caractérisé en ce que** la saisie d'une tâche de communication lors de l'étape (c) comprend d'une part :

(a) une étape de spécification d'un mouvement élémentaire, ledit mouvement élémentaire consistant à copier les éléments d'un motif opérande dans un motif résultat, ledit mouvement élémentaire étant répété plusieurs fois par la tâche de communication ; et d'autre part,

(b) une étape de spécification d'accès, ledit accès comprenant d'une part la relation entre les éléments du motif opérande avec les données du tableau de départ, et d'autre part la relation entre les éléments du motif résultat avec les données du tableau d'arrivée.

3. Procédé selon l'une des revendications précédentes, **caractérisé en ce qu'**il comprend en outre une étape de saisie de tâches d'appel, lesdites tâches d'appel faisant appel à d'autres tâches de communication et/ou de calcul et/ou d'appel.

4. Procédé selon l'une des revendications précédentes, **caractérisé en ce qu'**il comprend en outre une étape de simulation permettant de tester l'application placée lors des étapes précédentes.

5. Dispositif de placement d'applications multiprocesseurs sur une architecture cible, **caractérisé en ce qu'**il comprend au moins :

(a) des moyens de partitionnement suivant les données d'une application préalablement partitionnée en tâches de calcul ;

(b) des moyens d'affectation desdites tâches de calcul partitionnées suivant les données à des unités de calcul de l'architecture cible ;

(c) des moyens de saisie de tâches de communication, lesdites tâches de communication permettant de copier totalement ou partiellement les données d'un tableau départ vers un tableau d'arrivée, ledit tableau de départ affecté à des mémoires de départ de l'architecture cible, ledit tableau d'arrivée étant affecté à des mémoires d'arrivée de l'architecture cible.

6. Dispositif selon la revendication 5 **caractérisé en ce que** les moyens de saisie d'une tâche de communication comprennent d'une part :

(a) des moyens de saisie d'un mouvement élémentaire, ledit mouvement élémentaire consistant à copier les éléments d'un motif opérande dans un motif résultat, ledit mouvement élémentaire étant répété plusieurs fois par la tâche de communication ; et d'autre part,

(b) des moyens de saisie d'une spécification d'accès, ledit accès comprenant d'une part la relation entre les éléments du motif opérande avec les données du tableau de départ, et d'autre part la relation entre les éléments du motif résultat avec les données du tableau d'arrivée.

7. Dispositif selon l'une des revendications 5 à 6, **caractérisé en ce qu'**il comprend en outre des moyens de saisie de tâches d'appel, lesdites tâches d'appel faisant appel à d'autres tâches de communication et/ou de calcul et/ou d'appel.

8. Dispositif selon l'une des revendications 5 à 7, **caractérisé en ce qu'**il comprend en outre des moyens de simulation permettant de tester l'application placée avec les moyens précédents.

**Claims**

1. Method for placing multiprocessor applications on a target architecture, **characterized in that** it comprises at least the following steps:

   (a) a step of partitioning according to the data an application previously partitioned into computation tasks;
   (b) a step of assigning said computation tasks, partitioned according to the data, to computation units of the target architecture;
   (c) a step of inputting communication tasks, said communication tasks making it possible to copy totally or partially the data from a starting array to a finishing array, said starting array assigned to starting memories of the target architecture, said finishing array being assigned to finishing memories of the target architecture.

2. Method according to Claim 1, **characterized in that** the inputting of a communication task during step (c) comprises on the one hand:

   (a) a step of specifying an elementary movement, said elementary movement consisting in copying the elements of an operand pattern into a result pattern, said elementary movement being repeated several times by the communication task; and on the other hand,
   (b) an access specification step, said access comprising on the one hand the relation between the elements of the operand pattern with the data of the starting array, and on the other hand the relation between the elements of the result pattern with the data of the finishing array.

3. Method according to one of the preceding claims, **characterized in that** it furthermore comprises a step of inputting call tasks, said call tasks calling upon other communication and/or computation and/or call tasks.

4. Method according to one of the preceding claims, **characterized in that** it furthermore comprises a simulation step making it possible to test the application placed during the preceding steps.

5. Device for placing multiprocessor applications on a target architecture, **characterized in that** it comprises at least:

   (a) means for partitioning according to the data an application previously partitioned into computation tasks;
   (b) means for assigning said computation tasks partitioned according to the data to computation units of the target architecture;
   (c) means for inputting communication tasks, said communication tasks making it possible to copy totally or partially the data from a starting array to a finishing array, said starting array assigned to starting memories of the target architecture, said finishing array being assigned to finishing memories of the target architecture.

6. Device according to Claim 5, **characterized in that** the means for inputting a communication task comprise on the one hand:

   (a) means for inputting an elementary movement, said elementary movement consisting in copying the elements of an operand pattern into a result pattern, said elementary movement being repeated several times by the communication task; and on the other hand,
   (b) means for inputting an access specification, said access comprising on the one hand the relation between the elements of the operand pattern with the data of the starting array, and on the other hand the relation between the elements of the result pattern with the data of the finishing array.

7. Device according to one of Claims 5 to 6, **characterized in that** it furthermore comprises means for inputting call tasks, said call tasks calling upon other communication and/or computation and/or call tasks.

8. Device according to one of Claims 5 to 7, **characterized in that** it furthermore comprises simulation means making it possible to test the application placed with the preceding means.

**Patentansprüche**

1. Verfahren zum Platzieren von Mehrprozessoranwendungen auf einer Zielarchitektur, **dadurch gekennzeichnet, dass** es mindestens die folgenden Schritte umfasst:

(a) einen Teilungsschritt gemäß den Daten einer vorher in Rechenaufgaben unterteilten Anwendung;

(b) einen Schritt der Zuteilung der Rechenaufgaben, die gemäß den Daten unterteilt wurden, an Recheneinheiten der Zielarchitektur;

(c) einen Schritt der Erfassung von Kommunikationsaufgaben, wobei es die Kommunikationsaufgaben ermöglichen, die Daten einer Ausgangstabelle zu einer Bestimmungstabelle zur Gänze oder teilweise zu kopieren, wobei die Ausgangstabelle Ausgangsspeichern der Zielarchitektur zugeordnet ist, wobei die Bestimmungstabelle Bestimmungsspeichern der Zielarchitektur zugeordnet ist.

**2.** Verfahren nach Anspruch 1, **dadurch gekennzeichnet, dass** die Erfassung einer Kommunikationsaufgabe in Schritt (c) einerseits umfasst:

(a) einen Schritt der Spezifikation einer elementaren Bewegung, wobei die elementare Bewegung darin besteht, die Elemente eines Operandenmotivs in ein Ergebnismotiv zu kopieren, wobei die elementare Bewegung mehrmals durch die Kommunikationsaufgabe wiederholt wird; und andererseits

(b) einen Schritt der Zugriffsspezifikation, wobei der Zugriff einerseits das Verhältnis zwischen den Elementen des Operandenmotivs mit den Daten der Ausgangstabelle und andererseits das Verhältnis zwischen den Elementen des Ergebnismotivs mit den Daten der Bestimmungstabelle umfasst.

**3.** Verfahren nach einem der vorhergehenden Ansprüche, **dadurch gekennzeichnet, dass** es ferner einen Schritt der Erfassung von Rufaufgaben umfasst, wobei die Rufaufgaben auf weitere Kommunikationsaufgaben und/oder Rechenaufgaben und/oder Rufaufgaben zurückgreifen.

**4.** Verfahren nach einem der vorhergehenden Ansprüche, **dadurch gekennzeichnet, dass** es ferner einen Schritt der Simulation umfasst, der es ermöglicht, die bei den vorhergehenden Schritten platzierte Anwendung zu testen.

**5.** Vorrichtung zum Platzieren von Mehrprozessoranwendungen auf einer Zielarchitektur, **dadurch gekennzeichnet, dass** sie mindestens umfasst:

(a) Teilungsmittel gemäß den Daten einer vorher in Rechenaufgaben unterteilten Anwendung;

(b) Zuteilungsmittel der Rechenaufgaben, die gemäß den Daten unterteilt wurden, an Recheneinheiten der Zielarchitektur;

(c) Erfassungsmittel von Kommunikationsaufgaben, wobei es die Kommunikationsaufgaben ermöglichen, die Daten einer Ausgangstabelle zu einer Bestimmungstabelle zur Gänze oder teilweise zu kopieren, wobei die Ausgangstabelle Ausgangsspeichern der Zielarchitektur zugeordnet ist, wobei die Bestimmungstabelle Bestimmungsspeichern der Zielarchitektur zugeordnet ist.

**6.** Vorrichtung nach Anspruch 5, **dadurch gekennzeichnet, dass** die Mittel zur Erfassung einer Kommunikationsaufgabe einerseits umfassen:

(a) Mittel zur Erfassung einer elementaren Bewegung, wobei die elementare Bewegung darin besteht, die Elemente eines Operandenmotivs in ein Ergebnismotiv zu kopieren, wobei die elementare Bewegung mehrmals durch die Kommunikationsaufgabe wiederholt wird; und andererseits

(b) Mittel zur Erfassung einer Zugriffsspezifikation, wobei der Zugriff einerseits das Verhältnis zwischen den Elementen des Operandenmotivs mit den Daten der Ausgangstabelle und andererseits das Verhältnis zwischen den Elementen des Ergebnismotivs mit den Daten der Bestimmungstabelle umfasst.

**7.** Vorrichtung nach einem der Ansprüche 5 bis 6, **dadurch gekennzeichnet, dass** sie ferner Mittel zur Erfassung von Rufaufgaben umfasst, wobei die Rufaufgaben auf weitere Kommunikationsaufgaben und/oder Rechenaufgaben und/oder Rufaufgaben zurückgreifen.

**8.** Vorrichtung nach einem der Ansprüche 5 bis 7, **dadurch gekennzeichnet, dass** sie ferner Simulationsmittel umfasst, die es ermöglichen, die mit den vorhergehenden Mitteln platzierte Anwendung zu testen.

FIG.1

FIG. 2a

ARCHITECTURE (FIG.2a)

RÉSEAU DE COMMUNICATION
INTER-CARTES (200)

CARTES ÉLECTRONIQUES
(201,202,203,204,205)

RÉSEAU DE COMMUNICATION
INTER-NŒUDS (210)

NŒUDS
(211,212,213)

MÉMOIRE RAM
EXTERNE (222)

MÉMOIRE RAM
INTERNE (223)

UNITÉS DE
CALCUL (224,225)

FIG.2b

FIG.3

EP 1 356 382 B1

A1 — **A ECH ☒**

| | |
|---|---|
| cd | 1536 |
| ant | 8 |
| rec | 32 |

A2 — **A COEF ☒**

| | |
|---|---|
| voie | 6 |
| ant | 8 |

A3 — **A REP ☒**

| | |
|---|---|
| cd | 20 |

A4 — **A TWID ☒**

| | |
|---|---|
| x1 | 512 |

A5 — **A DOP ☒**

| | |
|---|---|
| voie | 6 |
| dop | 32 |
| cd | 1536 |

F1, F2, F3, F4, F5, F6, F7

**T FormationFaisceau (Mulac) ☒** — T1

| | Org. | Ajust. | Pavage | | |
|---|---|---|---|---|---|
| | | 8 | 1536 | 32 | 6 |
| ECH | 0 | ant | cd | rec | 0 |
| COEF | 0 | ant | 0 | 0 | voie |
| BF | 0 | 0 | cd | rec | voie |

**T CompressionImpulsion (Mulac) ☒** — T2

| | Org. | Ajust. | Pavage | | |
|---|---|---|---|---|---|
| | | 8 | 6 | 32 | 1536 |
| BF | 0 | cd | voie | rec | cd |
| REP | 0 | cd | 0 | 0 | 0 |
| COMP | 0 | 0 | voie | rec | cd |

**T FiltreDoppler (FFT) ☒** — T3

| | Org. | Ajust. | Pavage | |
|---|---|---|---|---|
| | | 32 | 6 | 1536 |
| COMP | 0 | rec | voie | cd |
| TWID | 0 | x1 | 0 | 0 |
| DOP | 0 | dop | voie | cd |

## FIG 4

D1

**Partitionnement** ☒

Départ : 32

Arrivée : 8, 4

OK ⌕  Cancel

T1

**T** FormationFaisceau (Mulac)

| | Org. | Ajust. | Pavage | | |
|---|---|---|---|---|---|
| | | 8 | 1536 | 32 | |
| ECH | 0 | ant | cd | rec | |
| COEF | 0 | ant | 0 | 0 | |
| BF | 0 | 0 | cd | rec | |

C1

# FIG 5

**T** FormationFaisceau (Mulac) ☒

| | Org. | Ajust. | Pavage | | | |
|---|---|---|---|---|---|---|
| | | 8 | 1536 | 8 | 4 | 6 |
| ECH | 0 | ant | cd | rec | 8rec | 0 |
| COEF | 0 | ant | 0 | 0 | 0 | voie |
| BF | 0 | 0 | cd | rec | 8rec | voie |

T1

C2  C3

# FIG 6

**FIG 7**

| | Org. | Ajust. | Pavage | | |
|---|---|---|---|---|---|
| | | 8 | 1536 | 8 | 4 |
| ECH | 0 | ant | cd | rec | 8rec |
| COEF | 0 | ant | 0 | 0 | 0 |
| BF | 0 | 0 | cd | rec | 8rec |

**Affectation (tâche)** — D2

Itérations : 8 — D21

Unités de calcul : P155MHz[8] — D22

OK   Cancel

T1

C2   C3

**FIG 8**

M1

M4

M2
A[7,1,5]
A[27,1,5]
A[47,1,5]
A[67,1,5]

M5
A[17,1,5]
A[37,1,5]
A[57,1,5]
A[77,1,5]

M3
A[7,3,5]
A[27,3,5]
A[47,3,5]
A[67,3,5]

M6
A[17,3,5]
A[37,3,5]
A[57,3,5]
A[77,3,5]

D3

**Affectation (tableau)**    ⊠

**Tableau :**

ECH[cd:1536][ant:8][rec:32]    D31

**Mémoires :**    DPRam[8] ▼    D32

D33

**Origines :**    0    0    D34

**Projecteur :**    8*rec    D35

**Motif local :**    1536*cd, 8*ant, 4*8rec    D36

OK    Cancel

A1

| **A** ECH |      |
|-----------|------|
| cd        | 1536 |
| ant       | 8    |
| rec       | 32   |

# FIG 9

| ECH[0..1535][0..7][0,8,16,24]  | DR1 |
|--------------------------------|-----|
| ECH[0..1535][0..7][1,9,17,25]  | DR2 |
| ECH[0..1535][0..7][2,10,18,26] | DR3 |
| ECH[0..1535][0..7][3,11,19,27] | DR4 |
| ECH[0..1535][0..7][4,12,20,28] | DR5 |
| ECH[0..1535][0..7][5,13,21,29] | DR6 |
| ECH[0..1535][0..7][6,14,22,30] | DR7 |
| ECH[0..1535][0..7][7,15,23,31] | DR8 |

# FIG 10

EP 1 356 382 B1

D4

| Saisie d 'une tâche de communication | X |
|---|---|

Tableau :     ECH[cd:1536][ant:8][rec:32]     D41

**Affectations**

| | Départ | Arrivée |
|---|---|---|
| Mémoires : | DPRam[8] | DataB0[8] |
| Origines : | 0    0 | 0    0 |
| Projecteur : | 8*rec | 8*rec |
| Motif local : | 1536*cd, 8*ant, 4*8rec | 1536*cd, 8*ant, 4*8rec |

D42

**Spécification de mouvement**

D45    D46   Nb. mémoires   Nb. éléments    D47

Mouvement élémentaire :   DPRam_DataB0 ▼   Motif opérande :   8   1

Décalage mémoire :   0   N° mémoire de départ :   0    D43

D48     D49

D44

**Spécification d 'accès**

Origine :   0

Ajustage :   8*rec    D50

Pavage :   1536*cd, 8*ant, 4*8rec    D51

D52

     OK     Cancel

# FIG 11

37

D4

| Saisie d 'une tâche de communication | ☒ |

**Tableau :** COMP[voie:6][rec:32][cd:1536]

**Affectations**

| | Départ | Arrivée |
|---|---|---|
| **Mémoires :** | DPRam[8] | DPRam[8] |
| **Origines :** | 0 | 0 | 0 | 0 |
| **Projecteur :** | 8*rec | 8*cd |
| **Motif local :** | 6*voie, 4*8rec, 1536*cd | 6*voie, 32*rec, 192*8cd |

**Spécification de mouvement**

D45

| | | Nb. mémoires | Nb. éléments |
|---|---|---|---|
| **Mouvement élémentaire :** | CT_DPRam ▼ **Motif opérande :** | 8 | 8 |
| **Décalage mémoire :** | 0 **N° mémoire de départ :** | 0 | |

D43

**Spécification d 'accès**

| **Origine :** | 0 |
| **Ajustage :** | 8*rec, 8*cd |
| **Pavage :** | 6*voie, 4*8rec, 192*8cd |

OK ▷  Cancel

# FIG 12

**FIG 13b**

**FIG 13a**

D4

| Saisie d'une tâche de communication | ☒ |

**Tableau :** | COMP[voie:6][rec:32][cd:1536] |

**Affectations**

| | Départ | Arrivée |
|---|---|---|
| Mémoires : | DataC[4][2] | DataC[4] [2] |
| Origines : | 0 | 0 | 0 | 0 |
| Projecteur : | 4*rec, 2*4rec | 4*rec, 0 |
| Motif local : | 6*voie, 4*8rec, 1536*cd | 6*voie, 8*4rec, 1536*cd |

**Spécification de mouvement**

D45

| | | Nb. mémoires | Nb. éléments |
|---|---|---|---|
| Mouvement élémentaire : | GT_DataC ▼ Motif opérande : | 4, 2 | 1 |
| Décalage mémoire : | 0 N° mémoire de départ : | 0 |

D43

**Spécification d'accès**

| Origine : | 0 |
| Ajustage : | 4*rec, 2*4rec |
| Pavage : | 6*voie, 4*8rec, 1536*cd |

| OK ⬉ | | Cancel |

## FIG 14

DC1 ①    ⑤ DC5   DC1 ① ⑤    DC5

DC2 ②    ⑥ DC6   DC2 ② ⑥    DC6

DC3 ③    ⑦ DC7   DC3 ③ ⑦    DC7

DC4 ④    ⑧ DC8   DC4 ④ ⑧    DC8

## FIG 15a          ## FIG 15b

### FormationFaisceau (Mulac) [T] [X]

| | Org. | Ajust. | Pavage | | | |
|---|---|---|---|---|---|---|
| | | 8 | 8 | 6 | 4 | 1536 |
| ECH | 0 | ant | rec | 0 | 8rec | cd |
| COEF | 0 | ant | 0 | voie | 0 | 0 |
| BF | 0 | 0 | rec | voie | 8rec | cd |

C11  C12  C13  C14

### CompressionImpulsion (Mulac) [T] [X]

| | Org. | Ajust. | Pavage | | | |
|---|---|---|---|---|---|---|
| | | 8 | 8 | 6 | 4 | 1536 |
| BF | 0 | cd | rec | voie | 8rec | cd |
| REP | 0 | cd | 0 | 0 | 0 | 0 |
| COMP | 0 | 0 | rec | voie | 8rec | cd |

C21  C22  C23  C24

### FiltreDoppler (FFT) [T] [X]

| | Org. | Ajust. | Pavage | |
|---|---|---|---|---|
| | | 32 | 6 | 1536 |
| COMP | 0 | rec | voie | cd |
| TWID | 0 | x1 | 0 | 0 |
| DOP | 0 | dop | voie | cd |

F1, F2, F3, F4, F5, F6, T1, T2, T3, S1

## FIG 16a

### Appel ( FormationFaisceau, CompressionImpulsion) [T] [X]

| | Org. | Ajust. | | | | | Pavage |
|---|---|---|---|---|---|---|---|
| | | 8 | 8 | 6 | 8 | 4 | 1536 |
| ECH | 0 | ant | 0 | 0 | rec | 8rec | cd |
| COEF | 0 | ant | 0 | voie | 0 | 0 | 0 |
| REP | 0 | 0 | cd | 0 | 0 | 0 | 0 |
| COMP | 0 | 0 | 0 | voie | rec | 8rec | cd |

C41

F1, F2, F4, F5, T4

## FIG 16b

GR

| | 0 | | 7.76ms | | 15.14ms |
|---|---|---|---|---|---|
GL1 — Com_ECH
GL2 — FormationFaisceau
GL3 — CompressionImpulsion
GL4 — Com_COMP_1
GL5 — Com_COMP_2

## FIG 17a

GR

| | 0 982us | 3.36ms | 5.75ms | 9.45ms | 13.15ms |
|---|---|---|---|---|---|
GL1 — Com_ECH
GL2 — FormationFaisceau
GL3 — CompressionImpulsion
GL4 — Com_COMP_1
GL5 — Com_COMP_2

## FIG 17b

**EP 1 356 382 B1**

## RÉFÉRENCES CITÉES DANS LA DESCRIPTION

**Documents brevets cités dans la description**

- FR 2791789 A